(19)

Europäisches Patentamt
European Patent Office
Office européen des brevets

(11) **EP 4 593 449 A1**

(12) **EUROPEAN PATENT APPLICATION**
published in accordance with Art. 153(4) EPC

(43) Date of publication:
**30.07.2025 Bulletin 2025/31**

(21) Application number: **22959602.8**

(22) Date of filing: **19.09.2022**

(51) International Patent Classification (IPC):
$H04W\ 24/08^{(2009.01)}$  $H04B\ 17/24^{(2015.01)}$
$H04B\ 17/309^{(2015.01)}$  $H04W\ 8/22^{(2009.01)}$
$H04L\ 5/00^{(2006.01)}$  $G06N\ 3/04^{(2023.01)}$

(52) Cooperative Patent Classification (CPC):
G06N 3/04; H04B 17/24; H04B 17/309; H04L 5/00;
H04W 8/22; H04W 24/08

(86) International application number:
**PCT/KR2022/013978**

(87) International publication number:
**WO 2024/063169 (28.03.2024 Gazette 2024/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **LG Electronics Inc.**
**Yeongdeungpo-gu**
**Seoul 07336 (KR)**

(72) Inventors:
• **KIM, Yeongjun**
  **Seoul 06772 (KR)**
• **KIM, Bonghoe**
  **Seoul 06772 (KR)**
• **LEE, Kyungho**
  **Seoul 06772 (KR)**
• **LEE, Sangrim**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **DEVICE AND METHOD FOR MEASURING CHANNEL IN WIRELESS COMMUNICATION SYSTEM**

(57)    The present disclosure relates to measuring a channel in a wireless communication system. A method for operating a user equipment (UE) may include receiving configuration information related to channel measurement from a base station, receiving reference signals for the channel measurement, generating feedback information related to a channel by using the reference signals, and transmitting the feedback information to the base station. The configuration information may include information indicating a channel environment, to which the UE belongs, out of at least one basis channel environment and at least one mixed channel environment or include information necessary for determining the channel environment.

**FIG. 22**

EP 4 593 449 A1

## Description

### Technical Field

The present disclosure relates to a wireless communication system, and particularly, to an apparatus and method for measuring a channel in a wireless communication system.

### Background Art

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, a single carrier-frequency division multiple access (SC-FDMA) system, etc.

In particular, as many communication apparatuses require a large communication capacity, an enhanced mobile broadband (eMBB) communication technology has been proposed compared to radio access technology (RAT). In addition, not only massive machine type communications (mMTC) for providing various services anytime anywhere by connecting a plurality of apparatuses and things but also communication systems considering services/user equipments (UEs) sensitive to reliability and latency have been proposed. To this end, various technical configurations have been proposed.

### Disclosure

### Technical Problem

The present disclosure may provide an apparatus and method for estimating a channel more efficiently in a wireless communication system.

The present disclosure may provide an apparatus and method for measuring a channel by using a reference signal pattern corresponding to a channel environment in a wireless communication system.

The present disclosure may provide an apparatus and method for measuring a channel by using a neural network model trained according to a channel environment in a wireless communication system.

The present disclosure may provide an apparatus and method for determining a channel environment to which a terminal belongings in a wireless communication system.

The present disclosure may provide an apparatus and method for measuring a channel by using a neural network model that is trained by considering channels distinguished into a basis channel environment and a mixed channel environment in a wireless communication system.

The present disclosure may provide an apparatus and method for measuring a channel by using a neural network model that is trained to combine outputs from neural network models that are trained to output channel information in a wireless communication system.

The present disclosure may provide an apparatus and method for classifying channel environments within a cell into a basis channel environment and a mixed channel environment in a wireless communication system.

The present disclosure may provide an apparatus and method for determining a similarity degree between channel environments that are distinguished according to a channel state in a wireless communication system.

The present disclosure may provide an apparatus and method for determining basis channel environments and mixed channel environments based on a similarity degree between channel environments in a wireless communication system.

The present disclosure may provide an apparatus and method for adaptively applying a neural network model that is trained to combine channel information in a wireless communication system.

The present disclosure may provide an apparatus and method for adaptively applying a neural network model, which is trained to combine channel information, according to whether a reference signal is additionally allocated, in a wireless communication system.

The present disclosure may provide an apparatus and method for adaptively applying a neural network model, which is trained to combine channel information, based on a required resource amount for additional allocation of a reference signal in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

**Technical Solution**

As an example of the present disclosure, a method for operating a user equipment (UE) in a wireless communication system may include receiving configuration information related to channel measurement from a base station, receiving reference signals for the channel measurement, generating feedback information related to a channel by using the reference signals, and transmitting the feedback information to the base station. The configuration information may include information indicating a channel environment, to which the UE belongs, out of at least one basis channel environment and at least one mixed channel environment, or include information necessary for determining the channel environment.

As an example of the present disclosure, a method for operating a base station in a wireless communication system may include transmitting configuration information related to channel measurement to a user equipment (UE), transmitting reference signals for the channel measurement, receiving feedback information related to a channel by using the reference signals, and obtaining channel information for the UE based on the feedback information.

The configuration information may include information indicating a channel environment, to which the UE belongs, out of at least one basis channel environment and at least one mixed channel environment, or include information necessary for determining the channel environment.

As an example of the present disclosure, a user equipment (UE) in a wireless communication system may include a transceiver and a processor coupled with the transceiver. The processor may be configured to receive configuration information related to channel measurement from a base station, to receive reference signals for the channel measurement, to generate feedback information related to a channel by using the reference signals, and to transmit the feedback information to the base station. The configuration information may include information indicating a channel environment, to which the UE belongs, out of at least one basis channel environment and at least one mixed channel environment, or include information necessary for determining the channel environment.

As an example of the present disclosure, a base station in a wireless communication system may include a transceiver and a processor coupled with the transceiver. The processor may be configured to transmit configuration information related to channel measurement to a user equipment (UE), to transmit reference signals for the channel measurement, to receive feedback information related to a channel by using the reference signals, and to obtain channel information for the UE based on the feedback information. The configuration information may include information indicating a channel environment, to which the UE belongs, out of at least one basis channel environment and at least one mixed channel environment, or include information necessary for determining the channel environment.

As an example of the present disclosure, a communication device may include at least one processor and at least one computer memory coupled with the at least one processor and storing an instruction that instructs operations when being executed by the at least one processor. The operations may include receiving configuration information related to channel measurement from a base station, receiving reference signals for the channel measurement, generating feedback information related to a channel by using the reference signals, and transmitting the feedback information to the base station. The configuration information may include information indicating a channel environment, to which the UE belongs, out of at least one basis channel environment and at least one mixed channel environment, or include information necessary for determining the channel environment.

As an example of the present disclosure, a non-transitory computer-readable medium storing at least one instruction may include the at least one instruction that is executable by a processor. The at least one instruction may control a device to receive configuration information related to channel measurement from a base station, to receive reference signals for the channel measurement, to generate feedback information related to a channel by using the reference signals, and to transmit the feedback information to the base station. The configuration information may include information indicating a channel environment, to which the UE belongs, out of at least one basis channel environment and at least one mixed channel environment, or include information necessary for determining the channel environment.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

**Advantageous Effects**

As is apparent from the above description, the embodiments of the present disclosure have the following effects.

According to the present disclosure, overhead of a reference signal for channel estimation may be reduced.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

**Description of Drawings**

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 illustrates an example of a communication system applicable to the present disclosure.
FIG. 2 illustrates an example of a wireless apparatus applicable to the present disclosure.
FIG. 3 illustrates another example of a wireless device applicable to the present disclosure.
FIG. 4 illustrates an example of a hand-held device applicable to the present disclosure.
FIG. 5 illustrates an example of a car or an autonomous driving car applicable to the present disclosure.
FIG. 6 illustrates an example of artificial intelligence (AI) device applicable to the present disclosure.
FIG. 7 illustrates a method of processing a transmitted signal applicable to the present disclosure.

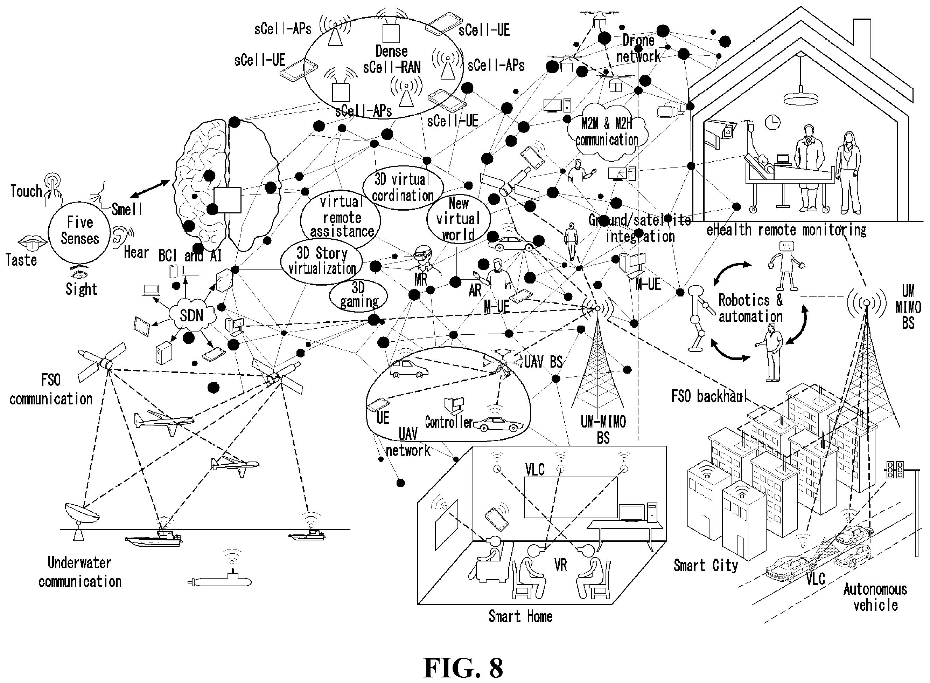

FIG. 8 illustrates an example of a communication structure providable in a 6th generation (6G) system applicable to the present disclosure.
FIG. 9 illustrates an electromagnetic spectrum applicable to the present disclosure.
FIG. 10 illustrates a THz communication method applicable to the present disclosure.
FIG. 11 illustrates a perceptron architecture in an artificial neural network applicable to the present disclosure.
FIG. 12 illustrates an artificial neural network architecture applicable to the present disclosure.
FIG. 13 illustrates a deep neural network applicable to the present disclosure.
FIG. 14 illustrates a convolutional neural network applicable to the present disclosure.
FIG. 15 illustrates a filter operation of a convolutional neural network applicable to the present disclosure.
FIG. 16 illustrates a neural network architecture with a recurrent loop applicable to the present disclosure.
FIG. 17 illustrates an operational structure of a recurrent neural network applicable to the present disclosure.
FIG. 18 illustrates a concept of pre-training for an antenna selection and channel recovery technique according to an embodiment of the present disclosure.
FIG. 19 illustrates an example of distinction of channel environments according to an embodiment of the present disclosure.
FIG. 20A to FIG. 20G illustrate specific examples of pre-training according to an embodiment of the present disclosure.
FIG. 21 illustrates an example of a reference signal transmission scenario in each channel environment according to an embodiment of the present disclosure.
FIG. 22 illustrates an example of distinction of channel environments including a mixed channel environment according to an embodiment of the present disclosure.
FIG. 23A to FIG. 23G illustrate specific examples of pre-training in consideration of a mixed channel environment according to an embodiment of the present disclosure.
FIG. 24 illustrates an example of a reference signal transmission scenario in each channel environment using a mixed channel environment according to an embodiment of the present disclosure.
FIG. 25 illustrates an example of a procedure of performing channel measurement according to an embodiment of the present disclosure.
FIG. 26 illustrates an example of a procedure of supporting channel measurement according to an embodiment of the present disclosure.
FIG. 27 illustrates an example of a procedure of selecting a channel measurement method according to an embodiment of the present disclosure.
FIG. 28 illustrates an example of clustering of channel environments according to an embodiment of the present disclosure.
FIG. 29 illustrates an example of selection of a basis channel environment according to an embodiment of the present disclosure.
FIG. 30 illustrates an example of selection of channel environments similar to each other according to an embodiment of the present disclosure.

**Mode for Invention**

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 38.211, 3GPP TS 38.212, 3GPP TS 38.213, 3GPP TS 38.321 and 3GPP TS 38.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

## Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

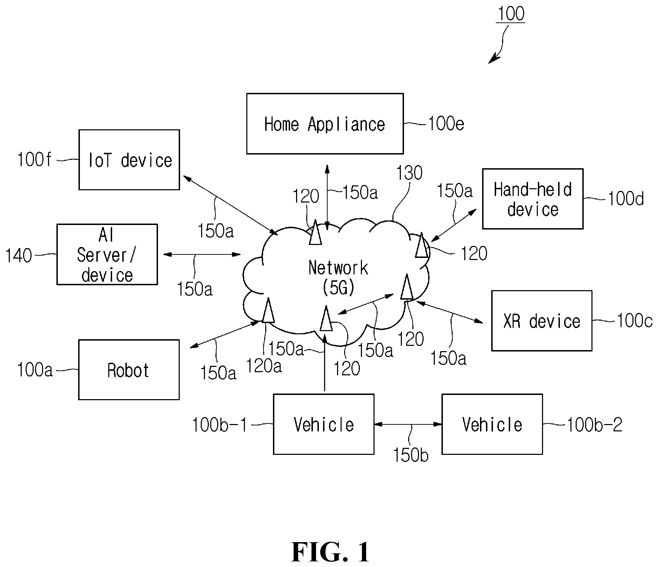

FIG. 1 illustrates an example of a communication system applicable to the present disclosure.

Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network or a 5G (e.g., NR) network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/connections 150a, 150b and 150c may be established between the wireless devices 100a to 100f/the base station 120 and the base station 120/the base station 120. Here, wireless communication/connection may be established through various radio access technologies (e.g., 5G NR) such as uplink/downlink communication 150a, sidelink communication 150b (or D2D communication) or communication 150c between base stations (e.g., relay, integrated access backhaul (IAB). The wireless device and the base station/wireless device or the base station and the base station may transmit/receive radio signals to/from each other through wireless communication/connection 150a, 150b and 150c. For example, wireless communication/connection 150a, 150b and 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

## Communication system applicable to the present disclosure

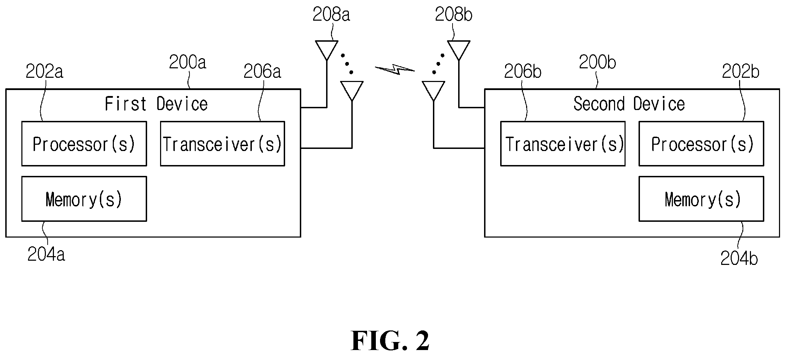

FIG. 2 illustrates an example of a wireless device applicable to the present disclosure.

Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be coupled with the processor 202a, and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be coupled with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip.

The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be coupled with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be coupled with the processor 202b to transmit and/or receive radio signals through one or more antennas 208b. The transceiver 206b may include a transmitter and/or a receiver. The transceiver 206b may be used interchangeably with a radio frequency (RF) unit. In the present disclosure, the wireless device may refer to a communication modem/circuit/chip.

Hereinafter, hardware elements of the wireless devices 200a and 200b will be described in greater detail. Without being limited thereto, one or more protocol layers may be implemented by one or more processors 202a and 202b. For example, one or more processors 202a and 202b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202a and 202b may generate one or more protocol data units (PDUs) and/or one or more service data unit (SDU) according to the descriptions, functions, procedures, proposals, methods and/or operational flowcharts disclosed herein. One or more processors 202a and 202b may generate messages, control information, data or information according to the descriptions, functions, procedures, proposals, methods and/or operational flowcharts disclosed herein. One or more processors 202a and 202b may generate PDUs, SDUs, messages, control information, data or information according to the functions, procedures, proposals and/or methods disclosed herein and provide the PDUs, SDUs, messages, control information, data or information to one or more transceivers 206a and 206b. One or more processors 202a and 202b may receive signals (e.g., baseband signals) from one or more transceivers 206a and 206b and acquire PDUs, SDUs, messages, control information, data or information according to the descriptions, functions, procedures, proposals, methods and/or operational flowcharts disclosed herein.

One or more processors 202a and 202b may be referred to as controllers, microcontrollers, microprocessors or microcomputers. One or more processors 202a and 202b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202a and 202b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202a and 202b or stored in one or more memories 204a and 204b to be driven by one or more processors 202a and 202b. The descriptions, functions, procedures, proposals, methods and/or operational flowcharts disclosed herein implemented using firmware or software in the form of code, a command and/or a set of commands.

One or more memories 204a and 204b may be coupled with one or more processors 202a and 202b to store various types of data, signals, messages, information, programs, code, instructions and/or commands. One or more memories 204a and 204b may be composed of read only memories (ROMs), random access memories (RAMs), erasable programmable read only memories (EPROMs), flash memories, hard drives, registers, cache memories, computer-readable storage mediums and/or combinations thereof. One or more memories 204a and 204b may be located inside and/or outside one or more processors 202a and 202b. In addition, one or more memories 204a and 204b may be coupled with one or more processors 202a and 202b through various technologies such as wired or wireless connection.

One or more transceivers 206a and 206b may transmit user data, control information, radio signals/channels, etc. described in the methods and/or operational flowcharts of the present disclosure to one or more other apparatuses. One or more transceivers 206a and 206b may receive user data, control information, radio signals/channels, etc. described in the methods and/or operational flowcharts of the present disclosure from one or more other apparatuses. For example, one or more transceivers 206a and 206b may be coupled with one or more processors 202a and 202b to transmit/receive radio signals. For example, one or more processors 202a and 202b may perform control such that one or more transceivers 206a and 206b transmit user data, control information or radio signals to one or more other apparatuses. In addition, one or more processors 202a and 202b may perform control such that one or more transceivers 206a and 206b receive user data, control information or radio signals from one or more other apparatuses. In addition, one or more transceivers 206a and 206b may be coupled with one or more antennas 208a and 208b, and one or more transceivers 206a and 206b may be configured to transmit/receive user data, control information, radio signals/channels, etc. described in the descriptions, functions, procedures, proposals, methods and/or operational flowcharts disclosed herein through one or more antennas 208a and 208b. In the present disclosure, one or more antennas may be a plurality of physical antennas or a plurality of logical antennas (e.g., antenna ports). One or more transceivers 206a and 206b may convert the received radio signals/channels, etc. from RF band signals to baseband signals, in order to process the received user data, control information, radio signals/channels, etc. using one or more processors 202a and 202b. One or more transceivers 206a and 206b may convert the user data, control information, radio signals/channels processed using one or more processors 202a and 202b from baseband signals into RF band signals. To this end, one or more transceivers 206a and 206b may include (analog) oscillator and/or filters.

**Structure of wireless device applicable to the present disclosure**

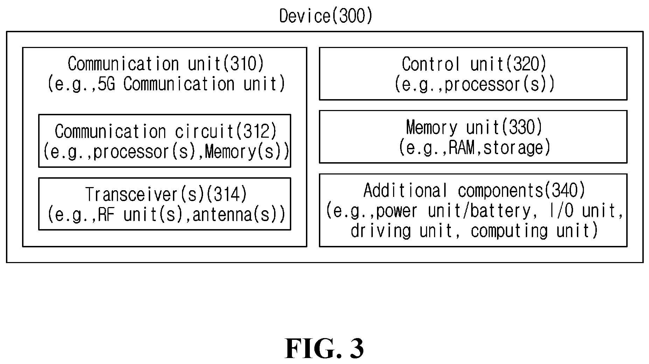

FIG. 3 illustrates another example of a wireless device applicable to the present disclosure.
Referring to FIG. 3, a wireless device 300 may correspond to the wireless devices 200a and 200b of FIG. 2 and include various elements, components, units/portions and/or modules. For example, the wireless device 300 may include a communication unit 310, a control unit (controller) 320, a memory unit (memory) 330 and additional components 340. The communication unit may include a communication circuit 312 and a transceiver(s) 314. For example, the communication circuit 312 may include one or more processors 202a and 202b and/or one or more memories 204a and 204b of FIG. 2. For example, the transceiver(s) 314 may include one or more transceivers 206a and 206b and/or one or more antennas 208a and 208b of FIG. 2. The control unit 320 may be electrically coupled with the communication unit 310, the memory unit 330 and the additional components 340 to control overall operation of the wireless device. For example, the control unit 320 may control electrical/mechanical operation of the wireless device based on a program/code/instruction/information stored in the memory unit 330. In addition, the control unit 320 may transmit the information stored in the memory unit 330 to the outside (e.g., another communication device) through the wireless/wired interface using the communication unit 310 over a wireless/wired interface or store information received from the outside (e.g., another communication device) through the wireless/wired interface using the communication unit 310 in the memory unit 330.
The additional components 340 may be variously configured according to the types of the wireless devices. For example, the additional components 340 may include at least one of a power unit/battery, an input/output unit, a driving unit or a computing unit. Without being limited thereto, the wireless device 300 may be implemented in the form of the robot (FIG. 1, 100a), the vehicles (FIG. 1, 100b-1 and 100b-2), the XR device (FIG. 1, 100c), the hand-held device (FIG. 1, 100d), the home appliance (FIG. 1, 100e), the IoT device (FIG. 1, 100f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.
In FIG. 3, various elements, components, units/portions and/or modules in the wireless device 300 may be coupled with each other through wired interfaces or at least some thereof may be wirelessly coupled through the communication unit 310. For example, in the wireless device 300, the control unit 320 and the communication unit 310 may be coupled by wire, and the control unit 320 and the first unit (e.g., 130 or 140) may be wirelessly coupled through the communication unit 310. In addition, each element, component, unit/portion and/or module of the wireless device 300 may further include one or more elements. For example, the control unit 320 may be composed of a set of one or more processors. For example, the control unit 320 may be composed of a set of a communication control processor, an application processor, an electronic control unit (ECU), a graphic processing processor, a memory control processor, etc. In another example, the memory unit 330 may be composed of a random access memory (RAM), a dynamic RAM (DRAM), a read only memory (ROM), a flash memory, a volatile memory, a non-volatile memory and/or a combination thereof.

**Hand-held device applicable to the present disclosure**

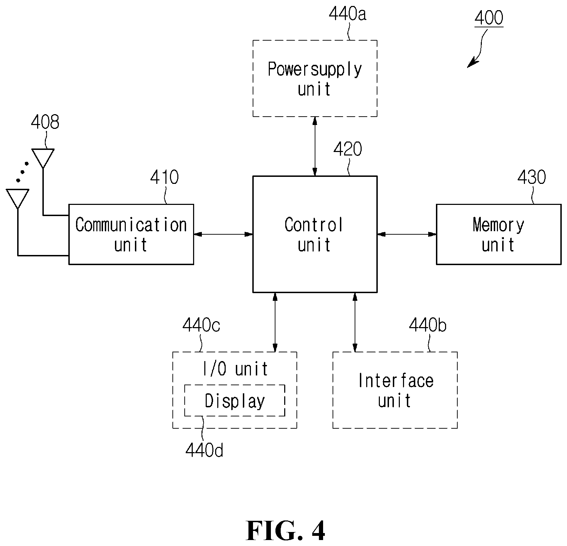

FIG. 4 illustrates an example of a hand-held device applicable to the present disclosure.

FIG. 4 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 4, the hand-held device 400 may include an antenna unit (antenna) 408, a communication unit (transceiver) 410, a control unit (controller) 420, a memory unit (memory) 430, a power supply unit (power supply) 440a, an interface unit (interface) 440b, and an input/output unit 440c. An antenna unit (antenna) 408 may be part of the communication unit 410. The blocks 410 to 430/440a to 440c may correspond to the blocks 310 to 330/340 of FIG. 3, respectively.

The communication unit 410 may transmit and receive signals (e.g., data, control signals, etc.) to and from other wireless devices or base stations. The control unit 420 may control the components of the hand-held device 400 to perform various operations. The control unit 420 may include an application processor (AP). The memory unit 430 may store data/parameters/program/code/instructions necessary to drive the hand-held device 400. In addition, the memory unit 430 may store input/output data/information, etc. The power supply unit 440a may supply power to the hand-held device 400 and include a wired/wireless charging circuit, a battery, etc. The interface unit 440b may support connection between the hand-held device 400 and another external device. The interface unit 440b may include various ports (e.g., an audio input/output port and a video input/output port) for connection with the external device. The input/output unit 440c may receive or output video information/signals, audio information/signals, data and/or user input information. The input/output unit 440c may include a camera, a microphone, a user input unit, a display 440d, a speaker and/or a haptic module.

For example, in case of data communication, the input/output unit 440c may acquire user input information/signal (e.g., touch, text, voice, image or video) from the user and store the user input information/signal in the memory unit 430. The communication unit 410 may convert the information/signal stored in the memory into a radio signal and transmit the converted radio signal to another wireless device directly or transmit the converted radio signal to a base station. In addition, the communication unit 410 may receive a radio signal from another wireless device or the base station and then restore the received radio signal into original information/signal. The restored information/signal may be stored in the memory unit 430 and then output through the input/output unit 440c in various forms (e.g., text, voice, image, video and haptic).

## Type of wireless device applicable to the present disclosure

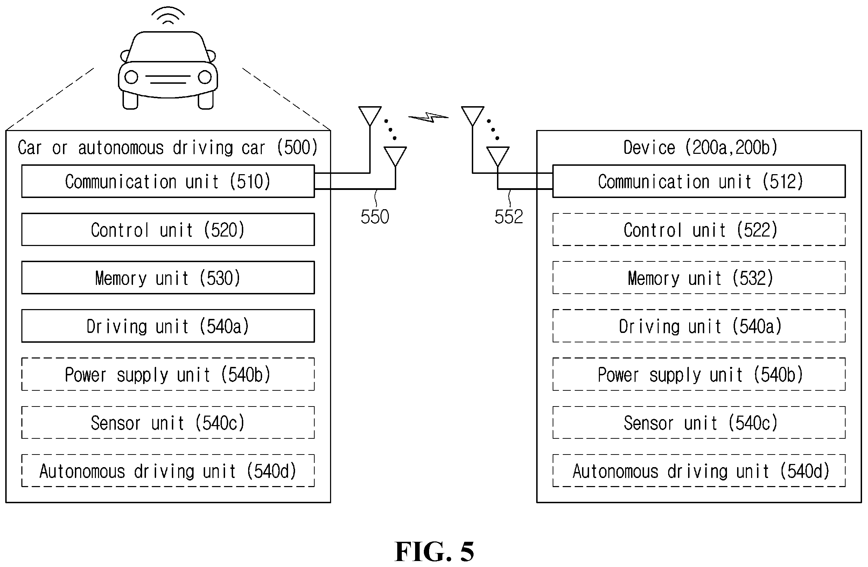

FIG. 5 illustrates an example of a car or an autonomous driving car applicable to the present disclosure.

FIG. 5 shows a car or an autonomous driving vehicle applicable to the present disclosure. The car or the autonomous driving car may be implemented as a mobile robot, a vehicle, a train, a manned/unmanned aerial vehicle (AV), a ship, etc. and the type of the car is not limited.

Referring to FIG. 5, the car or autonomous driving car 500 may include an antenna unit (antenna) 508, a communication unit (transceiver) 510, a control unit (controller) 520, a driving unit 540a, a power supply unit (power supply) 540b, a sensor unit 540c, and an autonomous driving unit 540d. The antenna unit 550 may be configured as part of the communication unit 510. The blocks 510/530/540a to 540d correspond to the blocks 410/430/440 of FIG. 4.

The communication unit 510 may transmit and receive signals (e.g., data, control signals, etc.) to and from external devices such as another vehicle, a base station (e.g., a base station, a road side unit, etc.), and a server. The control unit 520 may control the elements of the car or autonomous driving car 500 to perform various operations. The control unit 520 may include an electronic control unit (ECU).

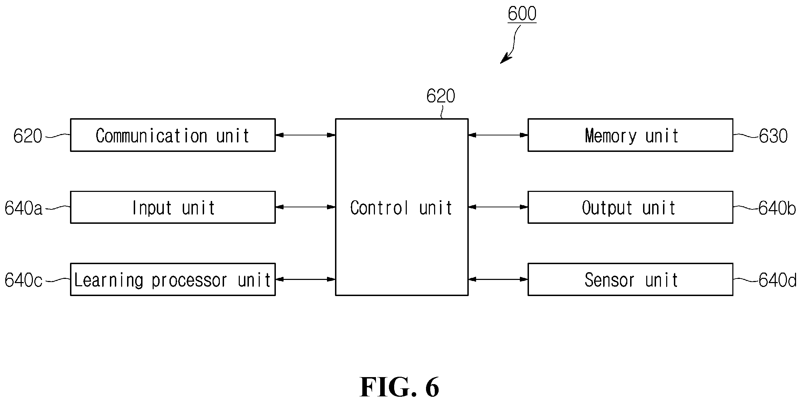

FIG. 6 is a diagram illustrating an example of an AI device applied to the present disclosure. For example, the AI device may be implemented as a fixed device or a movable device such as TV, projector, smartphone, PC, laptop, digital broadcasting terminal, tablet PC, wearable device, set-top box (STB), radio, washing machine, refrigerator, digital signage, robot, vehicle, etc.

Referring to FIG. 6, the AI device 600 may include a communication unit 610, a control unit 620, a memory unit 630, an input/output unit 640a/640b, a learning processor unit 640c and a sensor unit 640d. Blocks 610 to 630/640A to 640D may correspond to blocks 310 to 330/340 of FIG. 3, respectively.

The communication unit 610 may transmit and receive a wired and wireless signal (e.g., sensor information, user input, learning model, control signal, etc.) to and from external devices such as another AI device (e.g., 100x, 120, 140 in FIG. 1) or an AI server (140 in FIG. 1) using wired/wireless communication technology. To this end, the communication unit 610 may transmit information in the memory unit 630 to an external device or send a signal received from an external device to the memory unit 630.

The control unit 620 may determine at least one executable operation of the AI device 600 based on information determined or generated using a data analysis algorithm or machine learning algorithm. In addition, the control unit 620 may control the components of the AI device 600 to perform the determined operation. For example, the control unit 620 may request, search, receive, or utilize the data of the learning processor 640c or the memory unit 630, and control the components of the AI device 600 to perform predicted operation or operation determined to be preferred among at least one executable operation. In addition, the control unit 620 collects history information including a user's feedback on the operation content or operation of the AI device 600, and stores it in the memory unit 630 or the learning processor 640c or transmit it to an external device such as the AI server (140 in FIG. 1). The collected history information may be used to update a learning model.

The memory unit 630 may store data supporting various functions of the AI device 600. For example, the memory unit 630 may store data obtained from the input unit 640a, data obtained from the communication unit 610, output data of the learning processor unit 640c, and data obtained from the sensor unit 640. Also, the memory unit 630 may store control information and/or software code required for operation/execution of the control unit 620.

The input unit 640a may obtain various types of data from the outside of the AI device 600. For example, the input unit 620 may obtain learning data for model learning, input data to which the learning model is applied, etc. The input unit 640a may include a camera, a microphone and/or a user input unit, etc. The output unit 640b may generate audio, video or tactile output. The output unit 640b may include a display unit, a speaker and/or a haptic module. The sensor unit 640 may obtain at least one of internal information of the AI device 600, surrounding environment information of the AI device 600 or user information using various sensors. The sensor unit 640 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, and/or a radar.

The learning processor unit 640c may train a model composed of an artificial neural network using learning data. The learning processor unit 640c may perform AI processing together with the learning processor unit of the AI server (140 in FIG. 1). The learning processor unit 640c may process information received from an external device through the communication unit 610 and/or information stored in the memory unit 630. In addition, the output value of the learning processor unit 640c may be transmitted to an external device through the communication unit 610 and/or stored in the memory unit 630.

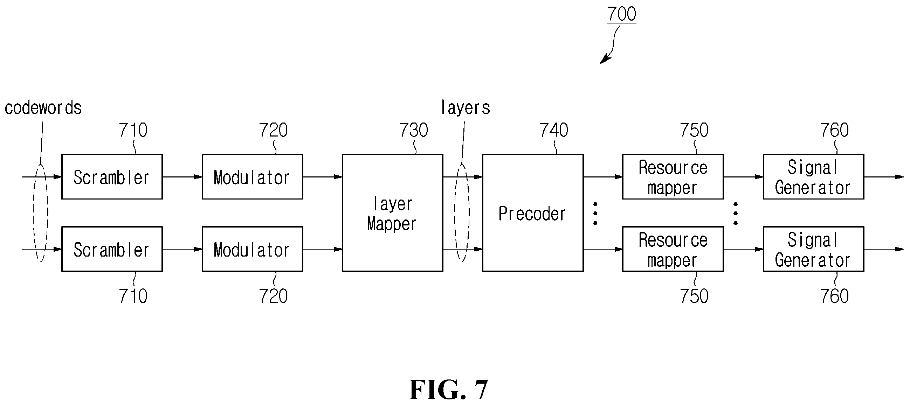

FIG. 7 illustrates a method of processing a transmitted signal applicable to the present disclosure. For example, the transmitted signal may be processed by a signal processing circuit. At this time, a signal processing circuit 700 may include a scrambler 710, a modulator 720, a layer mapper 730, a precoder 740, a resource mapper 750, and a signal generator 760. At this time, for example, the operation/function of FIG. 7 may be performed by the processors 202a and 202b and/or the transceiver 206a and 206b of FIG. 2. In addition, for example, the hardware element of FIG. 7 may be implemented in the processors 202a and 202b of FIG. 2 and/or the transceivers 206a and 206b of FIG. 2. For example, blocks 710 to 760 may be implemented in the processors 202a and 202b of FIG. 2. In addition, blocks 710 to 750 may be implemented in the processors 202a and 202b of FIG. 2 and a block 760 may be implemented in the transceivers 206a and 206b of FIG. 2, without being limited to the above-described embodiments.

A codeword may be converted into a radio signal through the signal processing circuit 700 of FIG. 7. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH). Specifically, the codeword may be converted into a bit sequence scrambled by the scrambler 710. The scramble sequence used for scramble is generated based in an initial value and the initial value may include ID information of a wireless device, etc. The scrambled bit sequence may be modulated into a modulated symbol sequence by the modulator 720. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 730. Modulation symbols of each transport layer may be mapped to corresponding antenna port(s) by the precoder 740 (precoding). The output z of the precoder 740 may be obtained by multiplying the output y of the layer mapper 730 by an N*M precoding matrix W. Here, N may be the number of antenna ports and M may be the number of transport layers. Here, the precoder 740 may perform precoding after transform precoding (e.g., discrete Fourier transform (DFT)) for complex modulation symbols. In addition, the precoder 740 may perform precoding without performing transform precoding.

The resource mapper 750 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 760 may generate a radio signal from the mapped modulation symbols, and the generated radio signal may be transmitted to another device through each antenna. To this end, the signal generator 760 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 710 to 760 of FIG. 7. For example, the wireless device (e.g., 200a or 200b of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a de-scrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

## 6G communication system

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 1 shows the requirements of the 6G system.

Table 1

| Per device peak data rate | 1 Tbps |
|---|---|
| E2E latency | 1 ms |
| Maximum spectral efficiency | 100 bps/Hz |
| Mobility support | up to 1000 km/hr |
| Satellite integration | Fully |
| AI | Fully |
| Autonomous vehicle | Fully |
| XR | Fully |
| Haptic Communication | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

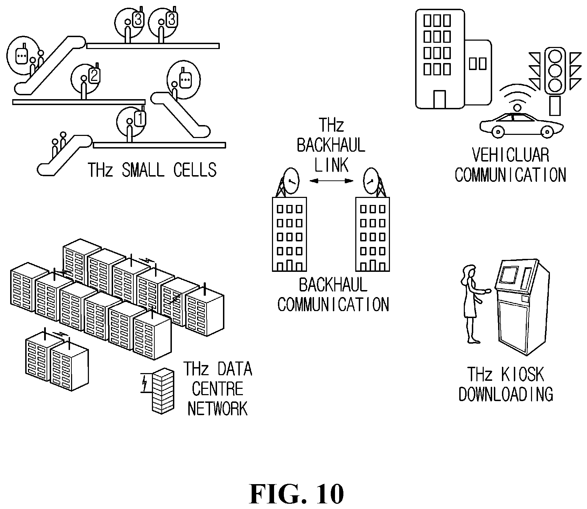

FIG. 10 illustrates an example of a communication structure providable in a 6G system applicable to the present disclosure.

Referring to FIG. 10, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system.

## Core implementation technology of 6G system

## Artificial intelligence (AI)

The most important and newly introduced technology for the 6G system is AI. AI was not involved in the 4G system. 5G systems will support partial or very limited AI. However, the 6G system will support AI for full automation. Advances in machine learning will create more intelligent networks for real-time communication in 6G. Introducing AI in communication may simplify and enhance real-time data transmission. AI may use a number of analytics to determine how complex target tasks are performed. In other words, AI may increase efficiency and reduce processing delay.

Time consuming tasks such as handover, network selection, and resource scheduling may be performed instantly by using AI. AI may also play an important role in machine-to-machine, machine-to-human and human-to-machine communication. In addition, AI may be a rapid communication in a brain computer interface (BCI). AI-based communication systems may be supported by metamaterials, intelligent structures, intelligent networks, intelligent devices, intelligent cognitive radios, self-sustained wireless networks, and machine learning.

Recently, attempts have been made to integrate AI with wireless communication systems, but application layers, network layers, and in particular, deep learning have been focused on the field of wireless resource management and allocation. However, such research is gradually developing into the MAC layer and the physical layer, and in particular, attempts to combine deep learning with wireless transmission are appearing in the physical layer. AI-based physical layer transmission means applying a signal processing and communication mechanism based on an AI driver rather than a traditional communication framework in fundamental signal processing and communication mechanisms. For example, deep learning-based channel coding and decoding, deep learning-based signal estimation and detection, deep learning-based multiple input multiple output (MIMO) mechanism, and AI-based resource scheduling and allocation may be included.

Machine learning may be used for channel estimation and channel tracking, and may be used for power allocation, interference cancellation, and the like in a downlink (DL) physical layer. Machine learning may also be used for antenna selection, power control, symbol detection, and the like in a MIMO system.

However, the application of DNN for transmission in the physical layer may have the following problems.

Deep learning-based AI algorithms require a lot of training data to optimize training parameters. However, due to limitations in obtaining data in a specific channel environment as training data, a lot of training data is used offline. This is because static training on training data in a specific channel environment may cause a contradiction between diversity and dynamic characteristics of a radio channel.

In addition, current deep learning mainly targets real signals. However, the signals of the physical layer of wireless communication are complex signals. In order to match the characteristics of a wireless communication signal, additional research on a neural network that detects a complex domain signal is required.

Hereinafter, machine learning will be described in greater detail.

Machine learning refers to a series of operations for training a machine to create a machine capable of performing a task which can be performed or is difficult to be performed by a person. Machine learning requires data and a learning model. In machine learning, data learning methods may be largely classified into three types: supervised learning, unsupervised learning, and reinforcement learning.

Neural network learning is to minimize errors in output. Neural network learning is a process of updating the weight of each node in the neural network by repeatedly inputting learning data to a neural network, calculating the output of the neural network for the learning data and the error of the target, and backpropagating the error of the neural network from the output layer of the neural network to the input layer in a direction to reduce the error.

Supervised learning uses learning data labeled with correct answers in the learning data, and unsupervised learning may not have correct answers labeled with the learning data. That is, for example, learning data in the case of supervised learning related to data classification may be data in which each learning data is labeled with a category. Labeled learning data is input to the neural network, and an error may be calculated by comparing the output (category) of the neural network and the label of the learning data. The calculated error is backpropagated in a reverse direction (i.e., from the output layer to the input layer) in the neural network, and the connection weight of each node of each layer of the neural network may be updated according to backpropagation. The amount of change in the connection weight of each updated node may be determined according to a learning rate. The neural network's computation of input data and backpropagation of errors may constitute a learning cycle (epoch). The learning rate may be applied differently according to the number of iterations of the learning cycle of the neural network. For example, in the early stages of neural network learning, a high learning rate is used to allow the neural network to quickly achieve a certain level of performance to increase efficiency, and in the late stage of learning, a low learning rate may be used to increase accuracy.

A learning method may vary according to characteristics of data. For example, when the purpose is to accurately predict data transmitted from a transmitter in a communication system by a receiver, it is preferable to perform learning using supervised learning rather than unsupervised learning or reinforcement learning.

The learning model corresponds to the human brain, and although the most basic linear model may be considered, a paradigm of machine learning that uses a neural network structure with high complexity such as artificial neural networks as a learning model is referred to as deep learning.

The neural network cord used in the learning method is largely classified into deep neural networks (DNN), convolutional deep neural networks (CNN), and recurrent Boltzmann machine (RNN), and this learning model may be applied.

**Terahertz (THz) communication**

THz communication is applicable to the 6G system. For example, a data rate may increase by increasing bandwidth. This may be performed by using sub-THz communication with wide bandwidth and applying advanced massive MIMO technology.

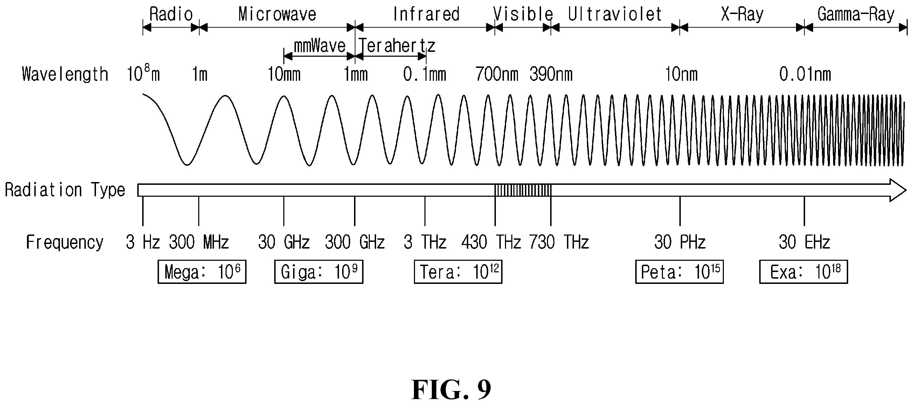

FIG. 9 illustrates an electromagnetic spectrum applicable to the present disclosure. For example, referring to FIG. 9, THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

The main characteristics of THz communication include (i) bandwidth widely available to support a very high data rate and (ii) high path loss occurring at a high frequency (a high directional antenna is indispensable). A narrow beam width generated by the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

**THz** wireless **communication**

FIG. 10 illustrates a THz communication method applicable to the present disclosure.

Referring to FIG. 10, THz wireless communication uses a THz wave having a frequency of approximately 0.1 to 10 THz (1 THz = 1012 Hz), and may mean terahertz (THz) band wireless communication using a very high carrier frequency of 100 GHz or more. The THz wave is located between radio frequency (RF)/millimeter (mm) and infrared bands, and (i) transmits non-metallic/non-polarizable materials better than visible/infrared rays and has a shorter wavelength than the RF/millimeter wave and thus high straightness and is capable of beam convergence.

**Artificial Intelligence System**

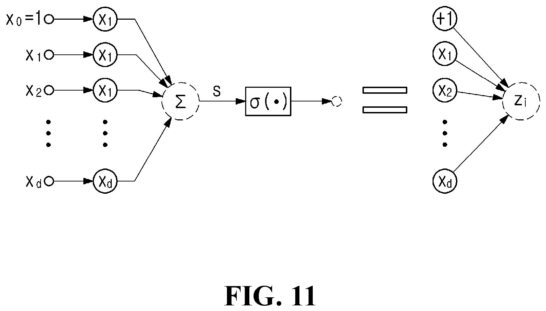

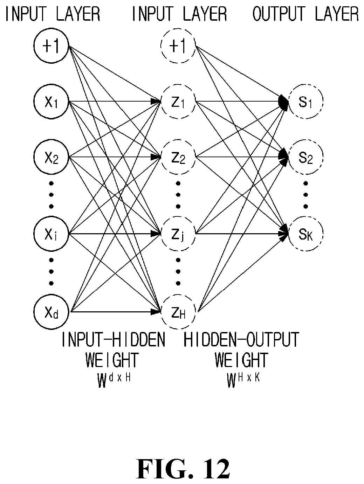

FIG. 11 illustrates a perceptron architecture in an artificial neural network applicable to the present disclosure. In addition, FIG. 12 illustrates an artificial neural network architecture applicable to the present disclosure.

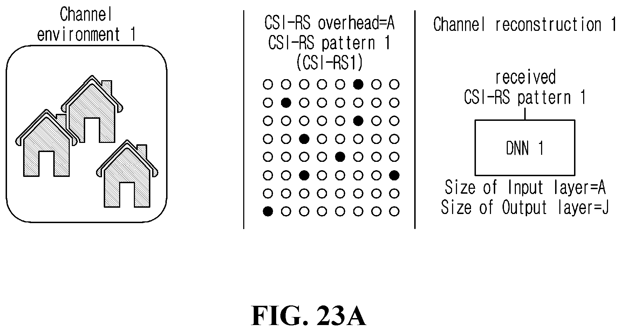

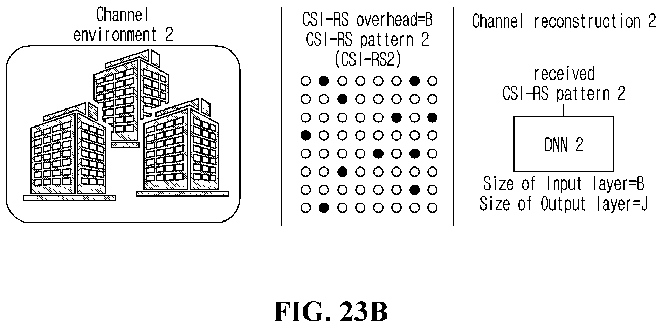

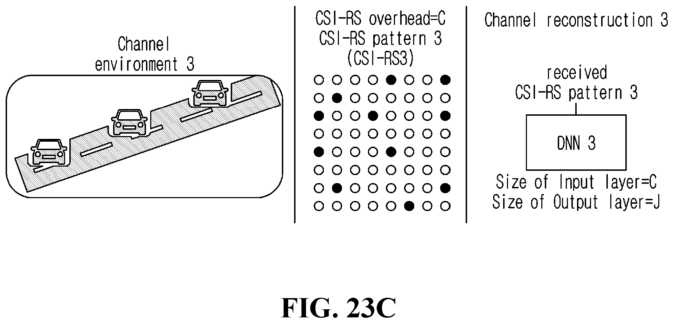

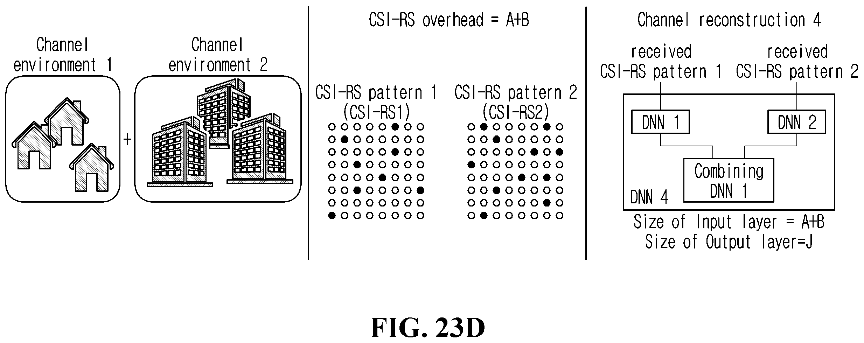

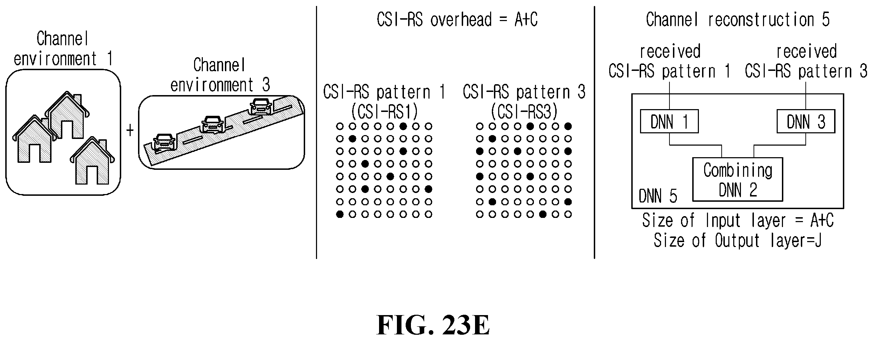

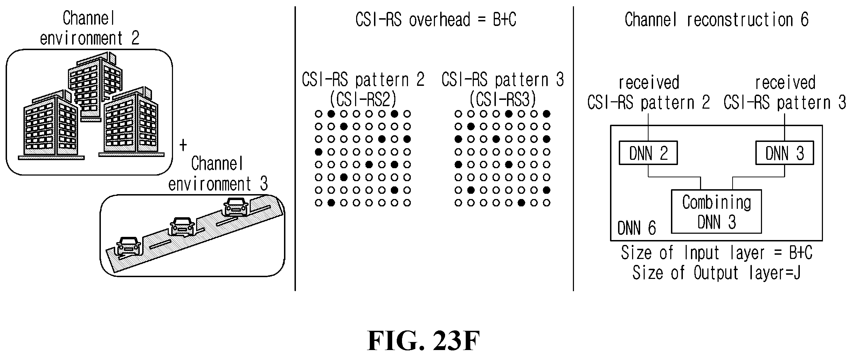

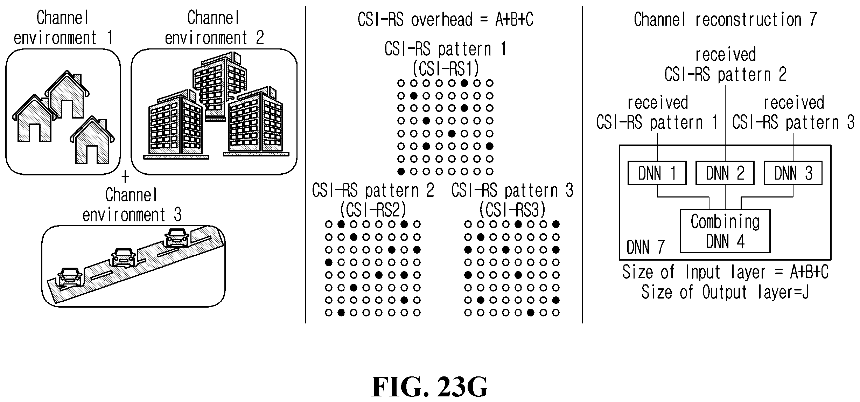

As described above, an artificial intelligence system may be applied to a 6G system. Herein, as an example, the artificial intelligence system may operate based on a learning model corresponding to the human brain, as described above. Herein, a paradigm of machine learning, which uses a neural network architecture with high complexity like artificial neural network, may be referred to as deep learning. In addition, neural network cores, which are used as a learning scheme, are mainly a deep neural network (DNN), a convolutional deep neural network (CNN), and a recurrent neural network (RNN). Herein, as an example referring to FIG. 23, an artificial neural network may consist of a plurality of perceptrons. Herein, when an input vector $x=\{x_1, x_2, ..., x_d\}$ is input, each component is multiplied by a weight $\{W_1, W_2, ..., W_d\}$, results are all added up, and then an activation function $\sigma()$ is applied, of which the overall process may be referred to as a perceptron. For a large artificial neural network architecture, when expanding the simplified perceptron structure illustrated in FIG. 11, an input may be applied to different multidimensional perceptrons. For convenience of explanation, an input value or an output value will be referred to as a node.

Meanwhile, the perceptron structure illustrated in FIG. 11 may be described to consist of a total of 3 layers based on an input value and an output value. An artificial neural network, which has H (d+1)-dimensional perceptrons between a 1st layer and a 2nd layer and K (H+1)-dimensional perceptrons between the 2nd layer and a 3rd layer, may be expressed as in FIG. 12.

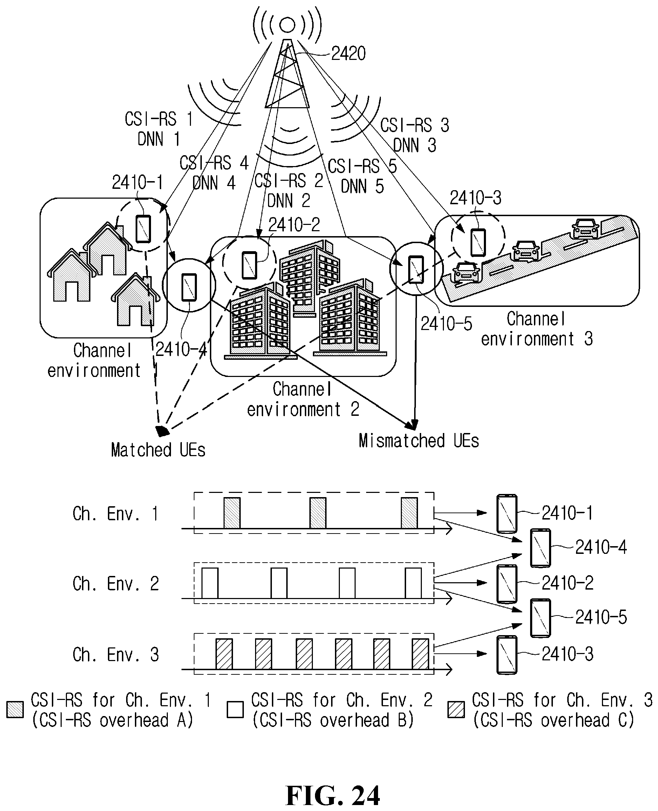

Herein, a layer, in which an input vector is located, is referred to as an input layer, a layer, in which a final output value is located, is referred to as an output layer, and all the layers between the input layer and the output layer are referred to as hidden layers. As an example, 3 layers are disclosed in FIG. 24, but since an input layer is excluding in counting the number of actual artificial neural network layers, it can be understood that the artificial neural network illustrated in FIG. 12 has a total of 2 layers. An artificial neural network is constructed by connecting perceptrons of a basic block two-dimensionally.

The above-described input layer, hidden layer and output layer are commonly applicable not only to multilayer perceptrons but also to various artificial neural network architectures like CNN and RNN, which will be described below. As there are more hidden layers, an artificial neural network becomes deeper, and a machine learning paradigm using a sufficiently deep artificial neural network as a learning model may be referred to as deep learning. In addition, an artificial neural network used for deep learning may be referred to as a deep neural network (DNN).

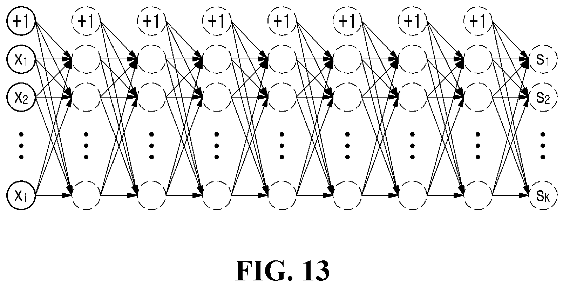

FIG. 13 illustrates a deep neural network applicable to the present disclosure.

Referring to FIG. 13, a deep neural network may be a multilayer perceptron consisting of 8 layers (hidden layers + output layer). Herein, the multilayer perceptron structure may be expressed as a fully-connected neural network. In a fully-connected neural network, there may be no connection between nodes in a same layer and only nodes located in neighboring layers may be connected with each other. A DNN has a fully-connected neural network structure combining a plurality of hidden layers and activation functions so that it may be effectively applied for identifying a correlation characteristic between an input and an output. Herein, the correlation characteristic may mean a joint probability between the input and the output.

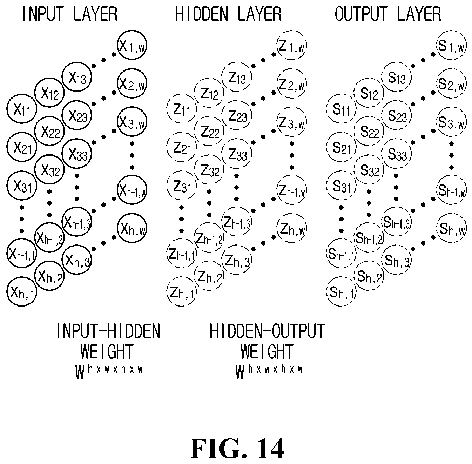

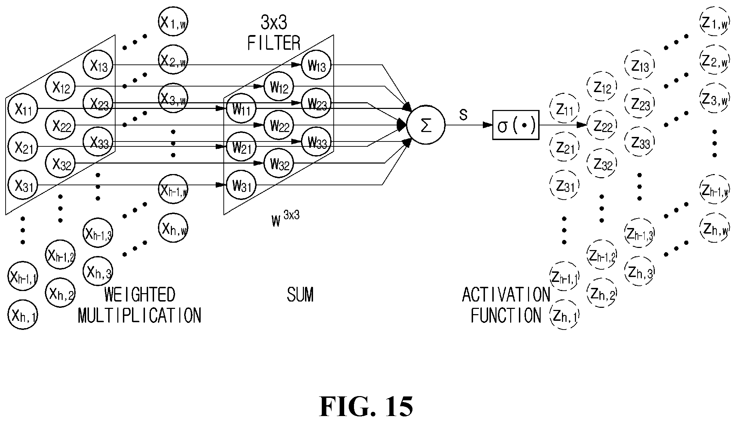

FIG. 14 illustrates a convolutional neural network applicable to the present disclosure. In addition, FIG. 15 illustrates a filter operation of a convolutional neural network applicable to the present disclosure.

As an example, depending on how to connect a plurality of perceptrons, it is possible to form various artificial neural network structures different from the above-described DNN. Herein, in the DNN, nodes located in a single layer are arranged in a one-dimensional vertical direction. However, referring to FIG. 14, it is possible to assume a two-dimensional array of w horizontal nodes and h vertical nodes (the convolutional neural network structures of FIG. 14). In this case, since a weight is applied to each connection in a process of connecting one input node to a hidden layer, a total of h x w weights should be considered. As there are h x w nodes in an input layer, a total of $h^2w^2$ weights may be needed between two neighboring layers.

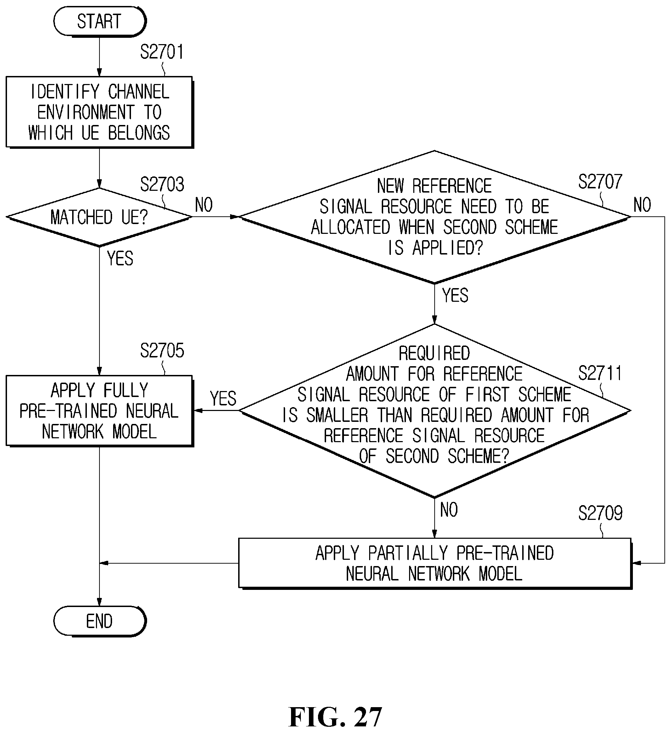

Furthermore, as the convolutional neural network of FIG. 14 has the problem of exponential increase in the number of weights according to the number of connections, the presence of a small filter may be assumed instead of considering every mode of connections between neighboring layers. As an example, as shown in FIG. 27, weighted summation and activation function operation may be enabled for a portion overlapped by a filter.

At this time, one filter has a weight corresponding to a number as large as its size, and learning of a weight may be performed to extract and output a specific feature on an image as a factor. In FIG. 15, a 3x3 filter may be applied to a top rightmost 3x3 area of an input layer, and an output value, which is a result of the weighted summation and activation function operation for a corresponding node, may be stored at $z_{22}$.

Herein, as the above-described filter scans the input layer while moving at a predetermined interval horizontally and vertically, a corresponding output value may be put a position of a current filter. Since a computation method is similar to a convolution computation for an image in the field of computer vision, such a structure of deep neural network may be referred to as a convolutional neural network (CNN), and a hidden layer created as a result of convolution computation may be referred to as a convolutional layer. In addition, a neural network with a plurality of convolutional layers may be referred to as a deep convolutional neural network (DCNN).

In addition, at a node in which a current filter is located in a convolutional layer, a weighted sum is calculated by including only a node in an area covered by the filter and thus the number of weights may be reduced. Accordingly, one filter may be so used as to focus on a feature of a local area. Thus, a CNN may be effectively applied to image data processing for which a physical distance in a two-dimensional area is a crucial criterion of determination. Meanwhile, a CNN may apply a plurality of filters immediately before a convolutional layer and create a plurality of output results through a convolution computation of each filter.

Meanwhile, depending on data properties, there may be data of which a sequence feature is important. A recurrent neural network structure may be a structure obtained by applying a scheme, in which elements in a data sequence are input one by one at each timestep by considering the distance variability and order of such sequence datasets and an output vector (hidden vector) output at a specific timestep is input with a very next element in the sequence, to an artificial neural network.

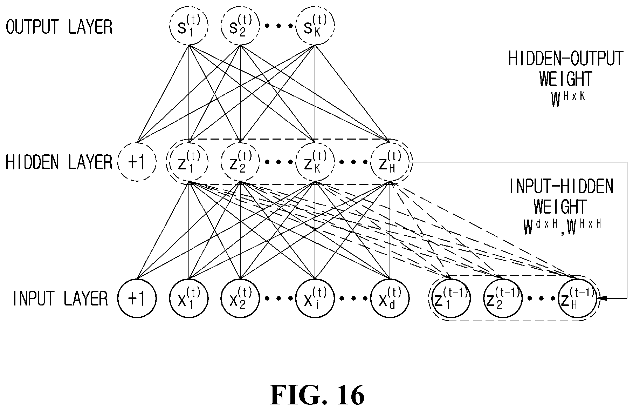

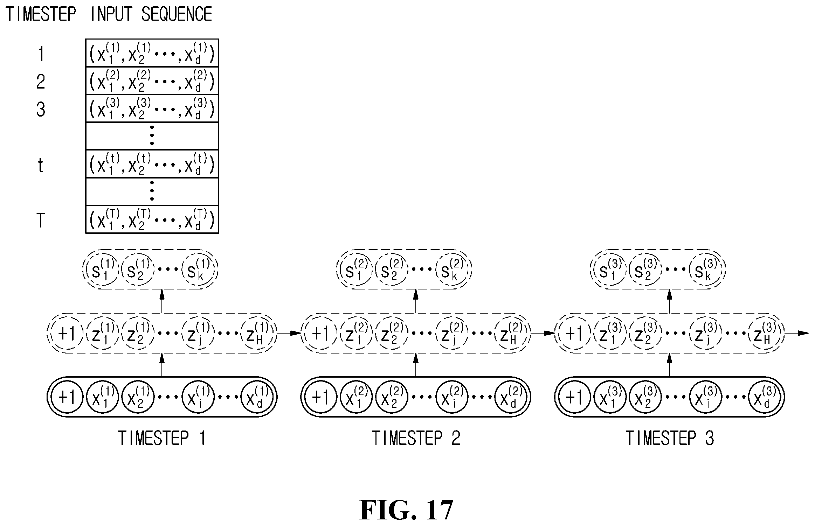

FIG. 16 illustrates a neural network architecture with a recurrent loop applicable to the present disclosure. FIG. 17 illustrates an operational structure of a recurrent neural network applicable to the present disclosure.

Referring to FIG. 16, a recurrent neural network (RNN) may have a structure which applies a weighted sum and an activation function by inputting hidden vectors $\{z_1^{(t-1)}, z_2^{(t-1)}, ..., z_H^{(t-1)}\}$ of an immediately previous timestep t-1 during a process of inputting elements $\{x_1^{(t)}, x_2^{(t)}, ..., x_d^{(t)}\}$ of a timestep t in a data sequence into a fully connected neural network. The reason why such hidden vectors are forwarded to a next timestep is because information in input vectors at previous timesteps is considered to have been accumulated in a hidden vector of a current timestep.

In addition, referring to FIG. 17, a recurrent neural network may operate in a predetermined timestep order for an input data sequence. Herein, as a hidden vector $\{z_1^{(1)}, z_2^{(1)}, ..., z_H^{(1)}\}$ at a time of inputting an input vector $\{x_1^{(t)}, x_2^{(t)}, ..., x_d^{(t)}\}$ of timestep 1 into a recurrent neural network is input together with an input vector $\{x_1^{(2)}, x_2^{(2)}, ..., x_d^{(2)}\}$ of timestep 2, a vector $\{z_1^{(2)}, z_2^{(2)}, ..., z_H^{(2)}\}$ of a hidden layer is determined through a weighted sum and an activation function. Such a process is iteratively performed at timestep 2, timestep 3 and until timestep T.

Meanwhile, when a plurality of hidden layers are allocated in a recurrent neural network, this is referred to as a deep recurrent neural network (DRNN). A recurrent neural network is so designed as to effectively apply to sequence data (e.g., natural language processing).

Apart from DNN, CNN and RNN, other neural network cores used as a learning scheme include various deep learning techniques like restricted Boltzmann machine (RBM), deep belief networks (DBN) and deep Q-Network, and these may be applied to such areas as computer vision, voice recognition, natural language processing, and voice/signal processing.

Recently, there are attempts to integrate AI with a wireless communication system, but these are concentrated in an application layer and a network layer and, especially in the case of deep learning, in a wireless resource management and allocation filed. Nevertheless, such a study gradually evolves to an MAC layer and a physical layer, and there are attempts to combine deep learning and wireless transmission especially in a physical layer. As for a fundamental signal processing and communication mechanism, AI-based physical layer transmission means application of a signal processing and communication mechanism based on an AI driver, instead of a traditional communication framework. For example, it may include deep learning-based channel coding and decoding, deep learning-based signal estimation and detection, deep learning-based MIMO mechanism, and AI-based resource scheduling and allocation.

**Specific embodiments** of the **present disclosure**

The present disclosure relates to channel measurement in a wireless communication system. Specifically, the present disclosure relates to a technique of measuring a channel based on reference signal patterns that are provided according to a channel environment. Furthermore, the present disclosure relates to a technique for mitigating performance degradation related to channel estimation errors through an artificial intelligence (AI) technology and for improving reception reliability.

A wireless communication system may provide various kinds of communication services including voice and data. With recent dramatic advances in AI technology, the number of attempts to integrate AI technology into communication systems is drastically increasing. Such attempts to integrate AI technology may be mainly classified into communications for AI (C4AI), which aim to support AI by developing communication technology, and AI for communications (AI4C) that aims for advanced communication by using AI technology. In the case of AI4C, there is an attempt to improve design efficiency by replacing a channel encoder/decoder by an end-to-end auto-encoder. In the case of C4AI, a federated learning technique, which is one of distributed learning techniques, may be used to share only a weight or gradient of a model with a server, while no raw data of a device is shared, such that a common prediction model may be updated while personal information is protected. In addition, a split inference technique has also been proposed to distribute loads across a device, a network edge, and a cloud server.

In AI-based communication, a study is underway to use the excellent recovery capability of machine learning (ML). As an example, a study is being conducted on a technique for channel estimation that uses less overhead than overhead of a reference signal considered in conventional communication. Such reduction of reference signal overhead may be applied across time, frequency and space.

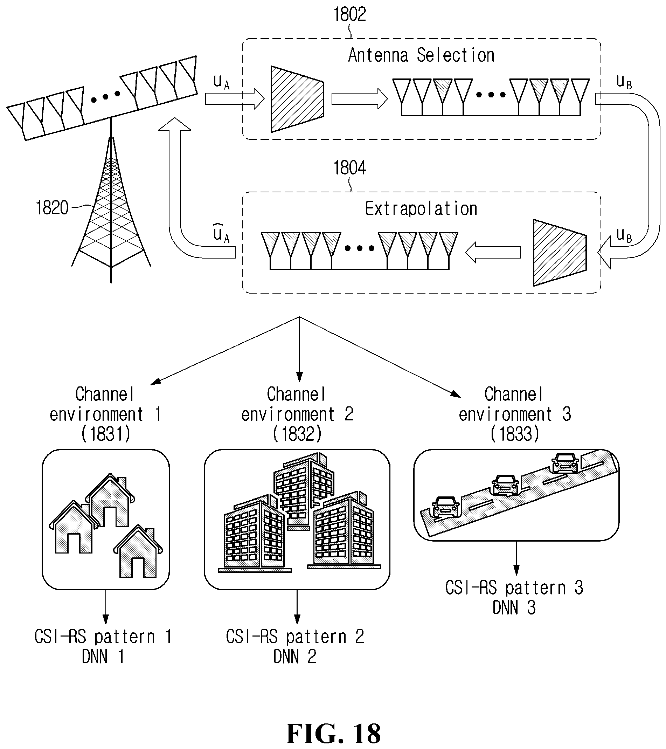

FIG. 18 illustrates a concept of pre-training for an antenna selection and channel recovery technique according to an embodiment of the present disclosure. Referring to FIG. 18, a base station 1820 transmits reference signals not through all antennas but through specific antennas 1802 that are selected through learning. In response thereto, a UE may estimate a channel by using a pattern of the transmitted reference signals and a trained channel reconstruction deep neural network (DNN). Thus, by estimating a channel through a reference signal and a deep neural network thar are learned by machine learning, the overhead required for transmitting a reference signal may be reduced.

As shown in FIG. 18, when a learned reference signal and a learned DNN are to be used, learning should be suitable for a channel environment. For example, learning may be classified into offline learning, which is performed for an anticipated channel environment in advance, and online learning that is performed according to a channel environment in real time. As online learning is performed in real time, if a channel environment changes, before channel estimation is performed, a training signal need to be transmitted for learning of a reference signal and a DNN. On the other hand, as offline learning is pre-training on an anticipated channel state, an actual operation method adaptively selects a reference signal pattern and a DNN according to a change of a channel environment. Accordingly, offline learning does not require any real-time transmission of a training signal for learning a reference signal and a DNN. Thus, offline learning may avoid transmitting a training signal considered in online learning, enabling a resource to be efficiently used. Referring to FIG. 18, pre-training is performed for three channel environments 1831, 1832 and 1833. Accordingly, a corresponding reference signal (e.g., channel state information (CSI)-reference signal (RS)) pattern and a corresponding DNN may be determined for each of the channel environments 1831, 1832 and 1833.

Channel environments within a cell may be distinguished according to channel states. If the channel environments are distinguished into 10 channel states different from each other, pre-training for offline learning may be performed for all the channel states within the cell, and 10 pairs of a reference signal pattern and a DNN may be obtained, corresponding to the number of the channel states for which pre-training is performed. In this case, when a system is operated, a base station is required to transmit reference signals according to the 10 reference signal patterns, thereby enabling every UE within the cell to estimate a channel. That is, in offline learning, reference signal transmission overhead is affected by the number of channel states that is considered for pre-training. That is, if a smaller number of channel states are considered, reference signal transmission overhead may be reduced. However, when the number of channel states is reduced, the representational capability for an actual channel decreases, which may lead to performance degradation.

Accordingly, in order to apply a technique of reducing reference signal transmission overhead based on machine learning using offline learning to a system, a technology for avoiding channel estimation performance degradation, while reducing the number of channel states considered for pre-training, is required. Thus, the present disclosure proposes a technology for avoiding channel estimation performance degradation and reducing the number of channel states considered for pre-training, when a machine learning (ML)-based technique of reducing reference signal overhead using offline learning is applied for reducing overhead in reference signal transmission. In the description below, a case of using a 'CSI-RS' as a type of reference signal will be described. As the CSI-RS is used as an example of a reference signal, the present disclosure is not limited thereto, and it is obvious that other types of reference signals are applicable.

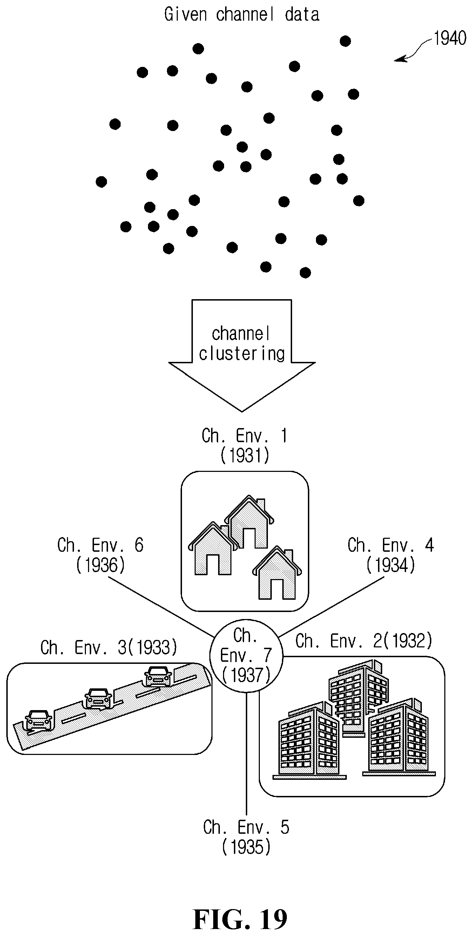

In offline learning, pre-training may be performed for each anticipated channel state. Herein, channel data may be synthetic data or measured data, and a channel state may be specified by a large scale feature, specifically, geography and geometry (e.g., building distribution), a statistical feature of a channel (e.g., azimuth spread, a power delay profile, etc.) and/or a Tx/Rx end structure. A concept of distinguishing a channel state by using given channel data is shown in FIG. 19 below.

FIG. 19 illustrates an example of distinction of channel environments according to an embodiment of the present disclosure. FIG. 19 exemplifies a case where channel data is divided into 7 channel environments. Referring to FIG. 19, given channel data 1940 is clustered according to a channel state. Through clustering, 7 channel states may be specified, and 7 channel environments 1930 to 1937 may be defined from the 7 channel states. Herein, the first channel environment 1931, the second channel environment 1932 and the third channel environment 1933 are not associated with any other channel environments. On the other hand, the fourth channel environment 1936 may be associated with the first channel environment 1931 and the second channel environment 1932, the fifth channel environment 1935 may be associated with the second channel environment 1932 and the third channel environment 1933, and the sixth channel environment 1936 may be associated with the first channel environment 1931 and the third channel environment 1933. In addition, the seventh channel environment 1937 may be associated with the first channel environment 1931, the second channel environment 1932 and the third channel environment 1933.

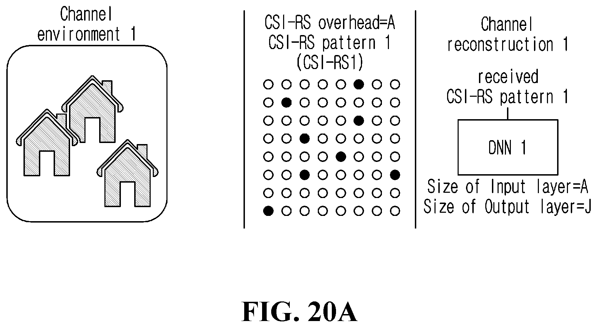

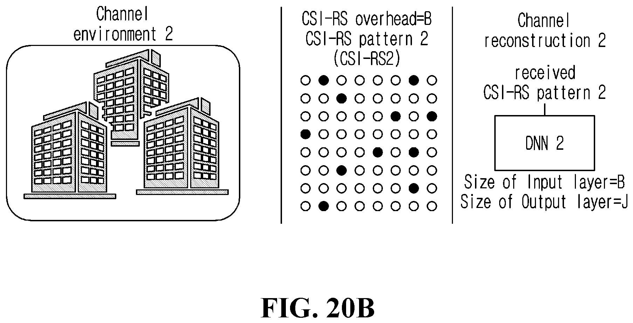

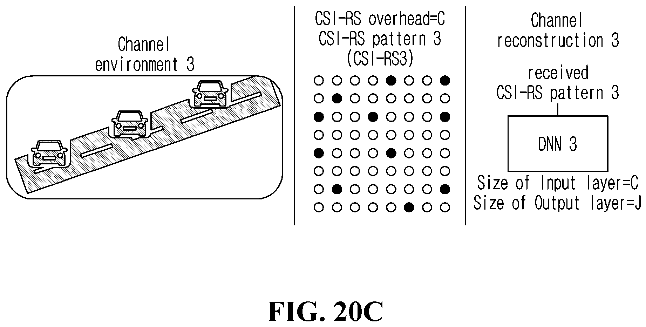

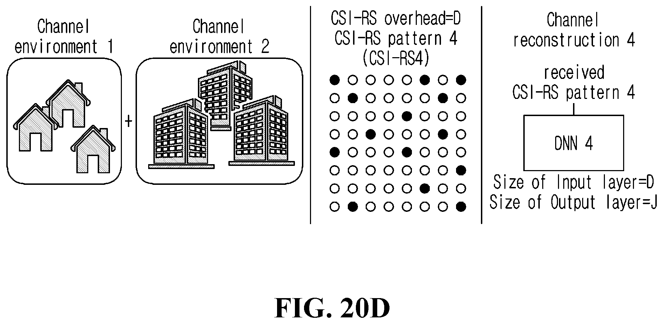

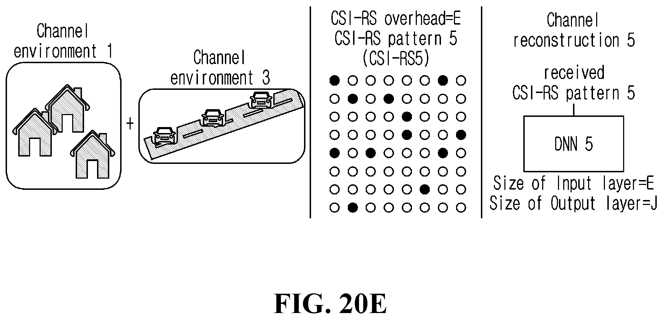

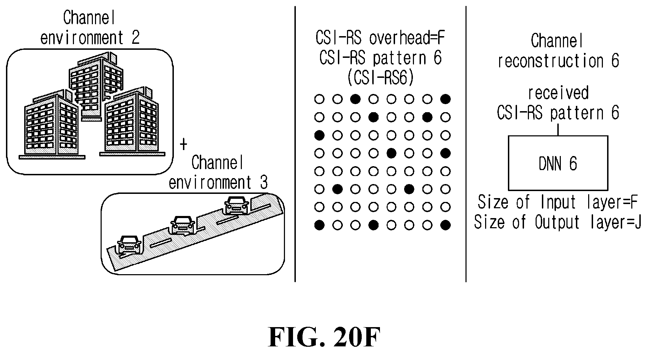

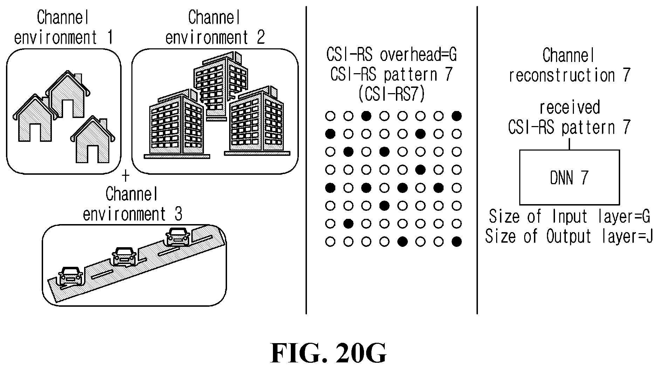

A first scheme according to various embodiments is a scheme of performing pre-training for each of all distinguished channel environments, as shown in FIG. 20A to FIG. 20G below. FIG. 20A to FIG. 20G illustrate concrete examples of pre-training according to an embodiment of the present disclosure. FIG. 20A to FIG. 20G exemplify offline learning for distinguished channel states as in FIG. 19. For each channel state, by learning a pre-learned CSI-RS pattern and channel reconstruction DNN, a pair of a CSI-RS and a channel reconstruction DNN may be configured. In FIG. 20A to FIG. 20G, a CSI-RS pattern is represented by a combination of empty circles and marked circles, specifically, by the positions and the number of marked circles. Herein, the marked circles may be interpreted as elements of an antenna array used for transmitting a CSI-RS, logical antenna ports, or beamforming vectors. The empty circles may be interpreted as elements of an antenna array not used for transmitting the CSI-RS, logical antenna ports, or beamforming vectors.

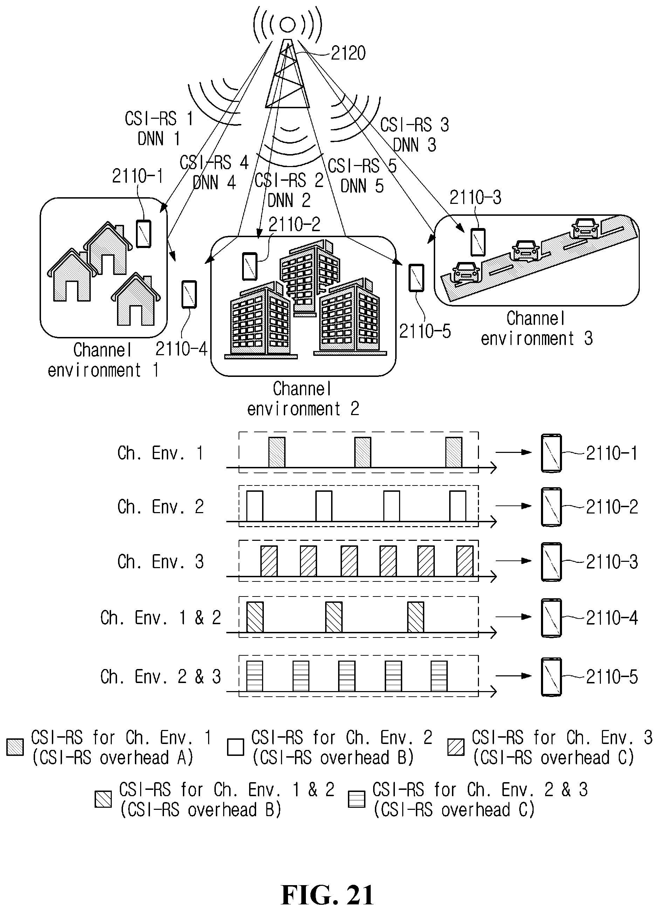

In case the first scheme of pre-training is applied as shown in FIG. 20A to FIG. 20G, a CSI-RS may be transmitted as shown in FIG. 21 below. FIG. 21 illustrates an example of a reference signal transmission scenario in each channel environment according to an embodiment of the present disclosure. Referring to FIG. 21, a UE1 2110-1, a UE2 2110-2 and a UE3 2110-3 experience a first channel environment, a second channel environment and a third channel environment, respectively, and a UE4 2110-4 and a UE5 2110-5 experience a fourth channel environment and a fifth channel environment, respectively. Accordingly, a base station 2120 transmits CSI-RSs by considering each of the channel environments experienced by the UEs 2110-1 to 2110-5. That is, as CSI-RSs following different reference signal patterns should be transmitted according to each pre-learned channel environment, the base station 2120 transmits CSI-RSs for a total of 5 different channel environments.

A channel reconstruction DNN may be operated either in a UE or in a base station. In case the channel reconstruction DNN is operated in the UE, the UE estimates a channel by using a received CSI-RS and delivers a parameter extracted from an estimated channel value or a channel estimation result to the base station. On the other hand, in case the channel construction DNN is operated in the base station, the UE may give feedback on received CSI-RS information (e.g., received value) to the base station, and the base station may estimate a channel by using the feedback on the CSI-RS information received by the UE. In the description below, the present disclosure assumes that a channel reconstruction DNN is operated in a UE, but the present disclosure is not limited thereto but may include a case where a channel reconstruction DNN is operated in a base station.

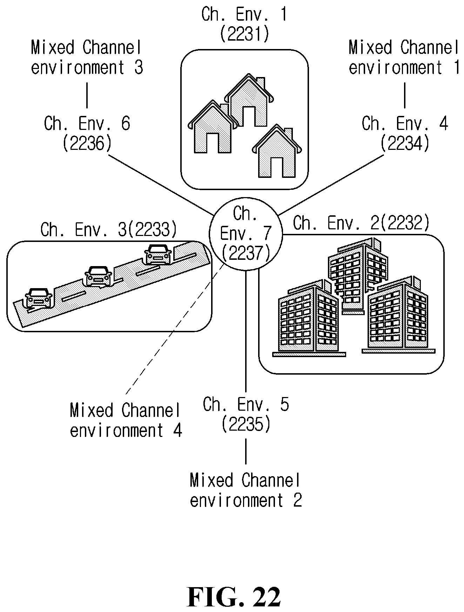

According to a second scheme, as compared with the first scheme, a smaller number of channel states are considered for pre-training in order to reduce CSI-RS transmission overhead. In the case of the second scheme, among channel environments distinguished as shown in FIG. 19, some channel environments are defined as a mixed channel environment. Channel environments including a mixed channel environment may be distinguished as shown in FIG. 22 below.

FIG. 22 illustrates an example of distinction of channel environments including a mixed channel environment according to an embodiment of the present disclosure. FIG. 22 exemplifies distinction of channel environments according to the second scheme. Referring to FIG. 22, a fourth channel environment 2234, a fifth channel environment 2235, a sixth channel environment 2236 and a seventh channel environment 2234, which are present between a first channel environment 2231, a second channel environment 2232 and a third channel environment 2233, are defined as a mixed channel environment. As shown in FIG. 22, a mixed channel environment has a channel state that is present between a plurality of channel states. For example, the fourth channel environment 2234 is a middle region between the first channel environment 2231 and the second channel environment 2232, having both a feature of the first channel environment 2231 and a feature of the second channel environment 2232. Herein, channel environments, which is a basis of a mixed channel environment, may be referred to as a 'basis channel environment', an 'independent channel environment', or any other terms with an equivalent technical meaning. In addition, in the present disclosure, a mixed channel environment and a basis channel environment, which is a basis of the mixed channel environment, may be described to be 'adjacent' to each other, and the basis channel environment may be referred to as an 'adjacent channel environment' of the mixed channel environment. In the second scheme, full pre-training is performed for channel states corresponding to remaining channel environments except at least one mixed channel environment. Accordingly, in FIG. 22, full pre-training is performed for the first channel environment 2231, the second channel environment 2232 and the third channel environment 2233, and a pair of a CSI-RS and a channel reconstruction DNN, which are learned for a corresponding channel environment, is obtained as a pre-training result. Thus, in the present disclosure, pre-training, which is performed to learn both a CSI-RS and a channel reconstruction DNN, is referred to as 'full pre-training'.

In the case of a mixed channel environment, during pre-training, a CSI-RS is not learned, but only a channel reconstruction DNN is learned. Thus, in the present disclosure, pre-training, in which a portion of a CSI-RS or a channel reconstruction DNN is learned, is referred to as 'partial pre-training'. A CSI-S, which is used for pre-training of a mixed channel environment, is a CSI-RS pattern corresponding to a channel state for adjacent full pre-training, and this is used to perform learning for a channel reconstruction RNN suitable for a channel state of the mixed channel environment.

The concept of the second scheme for performing pre-training is shown in FIG. 23A to FIG. 23G. FIG. 23A to FIG. 23G illustrate concrete examples of pre-training considering a mixed channel environment according to an embodiment of the present disclosure. Referring to FIG. 23A to FIG. 23C, for a first channel environment, a second channel environment and a third channel environment, a pair of a CSI-RS pattern and a channel reconstruction RNN is learned through full pre-training. On the other hand, referring to FIG. 23D to FIG. 23G, in the cases of a fourth channel environment, a fifth channel environment, a sixth channel environment and a seventh channel environment, which are a mixed channel environment, learning for a channel reconstruction DNN is performed by using CSI-RS patterns of an adjacent channel state among CSI-RS patterns that are learned by considering the first channel environment, the second channel environment and the third channel environment. The pre-training examples in FIG. 23D to FIG. 23G are examples of partial pre-training. FIG. 23D to FIG. 23G show an example of a channel reconstruction DNN that is learned during partial pre-training. In FIG. 23D to FIG. 23G, a channel reconstruction DNN for partial pre-training has a structure that combines channel reconstruction DNNs that are learned by full pre-training.

For example, referring to FIG. 23D, when a UE, which has experienced the fourth channel environment, is capable of receiving CSI-RSs for the first channel environment and the second channel environment, the UE inputs a CSI-RS (e.g., CSI-RS 1) for the first channel environment into a first DNN and inputs a CSI-RS (e.g., CSI-RS 2) for the second channel environment into a second DNN. However, because the first CSI-RS and the first DNN are a learned result in consideration of the first channel environment and the second CSI-RS and the second DNN are a learned result in consideration of the second channel environment, if they are applied to the fourth channel environment, it is expected that the first DNN and the second DNN have an error in a channel estimation result. Accordingly, the UE cannot use any channel estimation results based on the first DNN and the second DNN as they are. Therefore, the UE may treat outputs of the first DNN and the second DNN as a median value and obtain an ultimate channel estimation value through an additional DNN layer that is referred to as a combining DNN. In this case, for training of a channel reconstruction DNN, the UE may perform training only for the combining DNN in a pre-training process.

In FIG. 23A to FIG. 23G, a CSI-RS pattern is represented by a combination of empty circles and marked circles, specifically, by the positions and the number of marked circles. Herein, the marked circles may be interpreted as elements of an antenna array used for transmitting a CSI-RS, logical antenna ports, or beamforming vectors. The empty circles may be interpreted as elements of an antenna array not used for transmitting the CSI-RS, logical antenna ports, or beamforming vectors.

The concept of CSI-RS transmission with the second scheme being applied is shown in FIG. 24. FIG. 24 illustrates an example of a reference signal transmission scenario in each channel environment using a mixed channel environment according to an embodiment of the present disclosure. In FIG. 24, a UE1 2410-1, a UE2 2410-2 and a UE3 2410-3 experience a first channel environment, a second channel environment and a third channel environment, respectively, and a UE4 2410-4 and a UE5 2410-5 experience a fourth channel environment and a fifth channel environment, respectively, which are a mixed channel environment. In FIG. 24, the UEs 2410-1, 2410-2 and 2410-3, which are present in a region of a channel state for which full pre-training is performed, are referred to as a matched UE, and the UEs 2410-4 and 2410-5, which are present on a boundary of or outside regions of a channel state for which full pre-training is performed, are referred to as a mismatched UE. As the UEs 2410-1, 2410-2 and 2410-3 experience the first channel environment, the second channel environment and the third channel environment respectively, a base station 2420 transmits CSI-RSs according to CSI-RS patterns corresponding to the first channel environment, the second channel environment and the third channel environment. Herein, the matched UEs 2410-1, 2410-2 and 2410-3 may receive CSI-RSs for a channel state, to which each of them belongs, and perform channel estimation by using a channel reconstruction DNN suitable for a corresponding channel state. On the other hand, the mismatched UEs 2410-4 and 2410-5, which are present in a mixed channel environment, may receive a CSI-RS for an adjacent channel state to a channel environment, which each of the UEs experiences, among the CSI0-RSs transmitted for the first channel environment, the second channel environment and the third channel environment, and perform channel estimation by using a partially pre-trained DNN. Thus, in FIG. 24, because a CSI-RS is transmitted only for a fully pre-trained channel environment, CSI-RSs are transmitted only for a total of 3 channel environments. Accordingly, as shown in FIG. 24, in comparison with a case of transmitting CSI-RSs for 5 different channel states, CIS-RS transmission overhead is reduced.

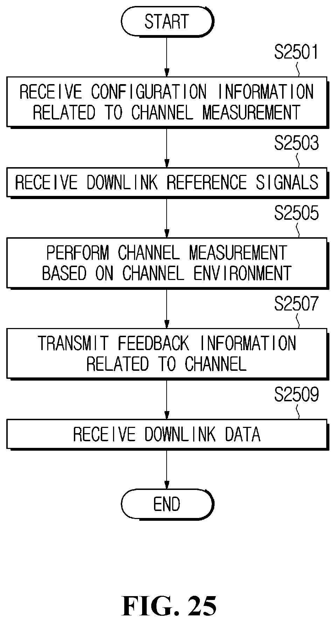

FIG. 25 illustrates an example of a procedure of performing channel measurement according to an embodiment of the present disclosure. FIG. 25 exemplifies a method for operating a UE that receives a reference signal and estimates a channel.

Referring to FIG. 25, at step S2501, a UE receives configuration information related to channel measurement. The configuration information may include information related to reference signals that are transmitted for a channel measurement operation and the channel measurement. For example, the configuration information may include information indicating a resource transmitted for the reference signals, information related to feedback on a measurement result, and information related to a sequence of a reference signal. In addition, according to various embodiments, the configuration information may include information related to a channel environment to which the UE belongs, information related to a neural network model for channel measurement, information related to a reference signal pattern, and information related to a channel measurement scheme. Specifically, the information related to a channel environment may include information indicating a channel environment to which the UE belongs or information necessary for determining the channel environment. For example, the information necessary for determining the channel environment may include, as a UE context requirement for each channel environment, at least one of a location, a geometry, a region, a moving speed, and a channel value change pattern.

At step S2503, the UE receives downlink reference signals. Based on the configuration information received at step S2501, the UE may receive the downlink reference signals. The downlink reference signals include at least one reference signal set, and the one reference signal set follows one reference signal pattern. That is, the UE receives at least one reference signal set according to at least one reference signal pattern. Herein, the at least one reference signal set received by the UE follows at least one reference pattern that is pre-learned alongside with at least one neural network model (e.g., at least one of the channel reconstruction DNNs exemplifies in FIG. 20A to FIG. 20G and FIG. 23A to FIG. 23G) for channel measurement in a channel environment that the UE experiences. A reference signal pattern, which a received reference signal follows, may be indicated by the configuration information received at step S2501.

At step S2505, the UE performs channel measurement based on a channel environment. According to various embodiments, the UE may generate channel information by using at least one neural network model for a channel environment to which the UE belongs. Herein, a type of the used neural network model may be different according to whether the channel environment is a basis channel environment (e.g., the first channel environment, the second channel environment and the third channel environment of FIG. 24) or a mixed channel environment (e.g., the fourth channel environment, the fifth channel environment, the sixth channel environment and the seventh channel environment of FIG. 24) and according to a channel estimation scheme (e.g., the first scheme or the second scheme). Specifically, in case the first scheme is applied, the at least one used neural network model may include a neural network model that has received values of reference signals as input and outputs channel information. As another example, in case the second scheme is applied and the UE experiences a basis channel environment, the at least one used neural network model may include a neural network model that has received values of reference signals as input and outputs channel information. As still another example, in case the second scheme is applied and the UE experiences a mixed channel environment, the at least one used neural network model may include at least one neural network model, which has received values of reference signals as input and outputs channel information, and a combining neural network model that has channel information output from the at least one neural network model as input and outputs channel information.

At step S2507, the UE transmits feedback information related to a channel. The UE may include channel information generated by using the at least one neural network model at step S2505 in the feedback information. The UE may transmit measurement information according to a scheme indicated by the configuration information related to channel measurement. In other words, the UE may transmit the feedback information including the channel information in a format indicated by the configuration information through a resource indicated by the configuration information. According to various embodiments, the feedback information may include a single channel information value or a plurality of channel information values. For example, in case the UE belongs to a mixed channel environment, a plurality of channel information values may include channel information that is generated by using neural network models for basis channel environments adjacent to the mixed channel environment.

At step S2509, the UE receives downlink data. Downlink signals generated from the downlink data are received after a precoder or transmission beamforming weights, which are determined based on the channel information included in the feedback information, are applied. Additionally, the UE may perform post-coding or reception beamforming for the received downlink signals.

In the embodiment described with reference to FIG. 25, the UE receives configuration information from a base station. According to the above-described embodiment, the configuration information includes various information elements. Herein, the various information elements may be received at different times through a plurality of messages. Furthermore, some of the information elements may be received after the feedback or response of the UE. For example, according to an embodiment, the UE may receive a first message including information necessary for determining a channel environment, transmit a second message for reporting the channel environment, and receive a third message including information for channel measurement in the reported channel environment.

In the embodiment described with reference to FIG. 25, the UE generates channel information by using a neural network model. However, according to another embodiment, a neural network model may be operated in a base station. In this case, the UE may transmit information on a received reference signal to the base station, and the base station may generate channel information by using the neural network model. Herein, the information on the reference signal may include a received value of the reference signal. That is, step S2505 may be omitted, and at step S2507, the UE may transmit the information on the reference signal (e.g., the received value) to the base station.

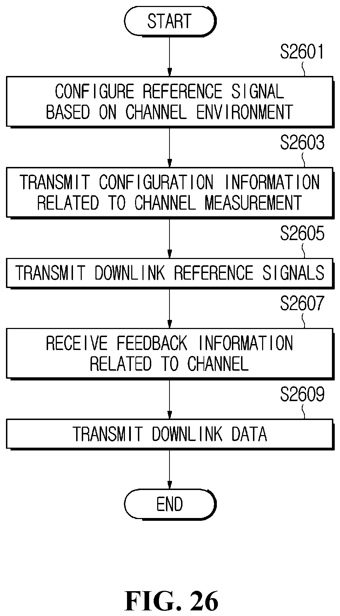

FIG. 26 illustrates an example of a procedure of supporting channel measurement according to an embodiment of the present disclosure. FIG. 26 exemplifies a method for operating a base station that transmits a reference signal.

Referring to FIG. 26, at step S2601, a base station configures reference signals based on a channel environment. Specifically, the base station determines channel environments, to which UEs within a cell belong, and identifies at least one reference signal pattern corresponding to the channel environments. In addition, based on the at least one identified reference signal pattern, the base station may configure reference signal resources, an element of an antenna array, a logical antenna port and/or a beamforming vector. To this end, the base station may obtain a context of the UEs and determine, based on the context, a channel environment to which each of the UEs belongs. Alternatively, the base station may receive information indicating a channel environment, to which each of the UEs belongs, from the UEs.

At step S2603, the base station transmits configuration information related to channel measurement. The configuration information may include information related to reference signals that are transmitted for a channel measurement operation and the channel measurement. For example, the configuration information may include information indicating a resource received for the reference signals, information related to feedback on a measurement result, and information related to a sequence of a reference signal. In addition, according to various embodiments, the configuration information may include information related to a channel environment to which a UE belongs, information related to a neural network model for channel measurement, information related to a reference signal pattern, and information related to a channel measurement scheme. Specifically, the information related to a channel environment may include information indicating a channel environment to which the UE belongs or information necessary for determining the channel environment (e.g., as a UE context requirement for each channel environment, a location, a geometry, a region, a moving speed, and a channel value change pattern).

At step S2605, the base station transmits downlink reference signals. Based on the configuration information transmitted at step S2601, the base station may transmit the downlink reference signals. The downlink reference signals include at least one reference signal set, and the one reference signal set follows one reference signal pattern. That is, the base station transmits at least one reference signal set according to at least one reference signal pattern. Herein, the at least one transmitted reference signal follows at least one reference pattern that is pre-learned alongside with at least one neural network model (e.g., at least one of the channel reconstruction DNNs exemplifies in FIG. 20A to FIG. 20G and FIG. 23A to FIG. 23G) for channel measurement in a channel environment that a UE experiences. A reference signal pattern, which a transmitted reference signal follows, may be indicated by the configuration information transmitted at step S2601.

At step S2607, the base station receives feedback information on a channel. Based on the feedback information, the base station may obtain channel information on a UE. According to an embodiment, the feedback information received by the base station may include channel information that the UE generates by using at least one neural network model. The base station may receive channel information according to a scheme indicated by the configuration information related to channel measurement. In other words, through a resource indicated by the configuration information, the base station may receive feedback information including channel information with a format indicated by the configuration information. According to various embodiments, the feedback information may include a single channel information value or a plurality of channel information values. For example, the plurality of channel information values may include channel information that is generated by using neural network models for adjacent basis channel environments, which are generated by a UE that belongs to a mixed channel environment.

At step S2609, the base station transmits downlink data. Downlink signals generated from the downlink data are transmitted after a precoder or reception beamforming weights, which are determined based on the channel information included in the feedback information, are applied. That is, the base station may determine the precoder or transmission beamforming weights based on received measurement information and apply the precoder or transmission beamforming weights to the downlink signals generated based on the downlink data.

In the embodiment described with reference to FIG. 26, configuration information is transmitted from the base station. According to the above-described embodiment, the configuration information includes various information elements. Herein, the various information elements may be transmitted at different times through a plurality of messages. Furthermore, some of the information elements may be transmitted after the feedback or response of a UE. For example, according to an embodiment, the base station may transmit a first message including information necessary for determining a channel environment, receive a second message for reporting the channel environment, and transmit a third message including information for channel measurement in the reported channel environment.

In the embodiment described with reference to FIG. 26, the base station receives channel information that a UE generates by using a neural network model. However, according to another embodiment, a neural network mode may be operated in the base station. In this case, the base station may receive information on a reference signal from a UE, and the base station may generate channel information by using the neural network model. Herein, information on a reference signal may include a received value of the reference signal. That is, at step S2607, the base station may receive information on a reference signal (e.g., a received value) from a UE and generate channel information from the received information by using the neural network model.

According to the various embodiments described above, channel measurement may be performed by considering a channel environment through a pre-learned reference signal pattern and a pre-learned neural network model. Herein, the above-described first scheme alone may be applied (e.g., FIG. 19 to FIG. 21), the above-described second scheme alone may be applied (e.g., FIG. 22 to FIG. 24), or the first scheme (e.g., FIG. 19 to FIG. 21) or the second scheme (e.g., FIG. 22 to FIG. 24) may be selectively applied according to situations.

For example, in case a UE experiences a channel environment (hereinafter, 'fourth channel environment') corresponding to a combination of a first channel environment and a second channel environment as shown by the UE4 2110-4 or 2410-4 of FIG. 21 and FIG. 24, if the second scheme is applied, a channel state of the UE is recognized as a mixed channel environment, and the UE estimates a channel by using CSI-RSs for the first channel environment and CSI-RSs for the second channel environment according to the procedure of the second scheme. On the other hand, if the first scheme is applied, the channel state of the UE is recognized as an independent fourth channel environment, a CSI-RS resource for the UE is allocated, and the UE estimates a channel by using CSI-RSs that are determined according to full pre-training for the fourth channel environment. Of the first scheme and the two scheme, a channel estimation scheme may be selected according to a channel state of the UE and a CSI-RS transmission situation of a base station. A procedure of transmitting a CSI-RS and estimating a channel by using the first scheme and the second scheme is as shown in FIG. 27 below.

FIG. 27 illustrates an example of a procedure of selecting a channel measurement method according to an embodiment of the present disclosure. FIG. 27 exemplifies a method for operating a base station that controls channel measurement. The procedure exemplified in FIG. 27 includes operations for one UE, and in case a plurality of UEs are present within a cell, the procedure exemplified in FIG. 27 may be repeatedly performed.

Referring to FIG. 27, at step S2701, a base station identifies a channel environment to which a UE belongs. To this end, the base station may receive context information from the UE or information indicating the channel environment determined by the UE.

At step S2703, the base station determines whether the UE is a matched UE. In other words, the base station determines whether the channel environment, to which the UE belongs, is a basis channel environment. That is, the base station identifies whether the channel environment identified at step S2701 is one of basis channel environments that are designated in a pre-training procedure.

If the UE is a matched UE, at step S2705, the base station applies a fully pre-trained neural network model. That is, the base station transmits a message for configuring the use of a fully pre-trained neural network model to the UE. For example, the base station may transmit at least one of information indicating the neural network model, information indicating a channel environment, and information indicating a reference signal pattern. In addition, the base station may transmit reference signals according to a reference signal pattern for a corresponding basis channel environment.

On the other hand, if the UE is not a matched UE, at step S2707, the base station determines whether a new reference signal resource need to be allocated when the second scheme is applied. In case the UE is a mismatched UE, when the second scheme is applied, the base station should provide reference signals according to reference signal patterns for channel environments adjacent to a mixed channel environment. Herein, if there are other UEs that belong to the adjacent channel environments, the base station may not additionally allocate a reference signal resource for corresponding reference signal patterns but control the mismatched UE to receive reference signals transmitted for the other UEs.

When the second scheme is applied, if no new reference signal resource need to be allocated, at step S2709, the base station applies a partially pre-trained neural network model. That is, in case reference signal patterns required in a mixed channel environment, that is, a reference signal pattern for an adjacent channel environment is used for other UEs, the base station may not allocate an additional reference signal resource for the UE but transmit configuration information for reference signals transmitted for the other UEs to the UE, thereby configuring the reference signals to be received by the UE. Herein, if necessary, the base station may modify a configuration for the reference signals transmitted for the other UEs.

On the other hand, if a new reference signal resource need to be allocated when the second scheme is applied, at step S2711, the base station determines whether a required amount for a reference signal resource of the first scheme is smaller than a required amount for a reference signal resource of the second scheme. Specifically, for a channel environment to which the UE belongs, the base station identifies a first required amount for a reference signal resource, which should be allocated to apply a separate reference signal pattern for the channel environment according to the first scheme, and a second required amount of a reference signal resource that should be allocated to apply a reference signal pattern for at least one adjacent channel environment according to the second scheme, and then compares the first required amount and the second required resource amount.

If the first required amount is smaller than the second required amount, at step S2705, the base station applies a fully pre-trained neural network model. That is, the base station transmits a message for configuring the use of the fully pre-trained neural network model to the UE. For example, the base station may transmit at least one of information indicating the neural network model, information indicating a channel environment, and information indicating a reference signal pattern. In addition, the base station may transmit reference signals according to a reference signal pattern for a corresponding basis channel environment.

On the other hand, if the first required amount is greater than or equal to the second required amount, at step S2709, the base station applies a partially pre-trained neural network model. Herein, unlike proceeding from step S2707, the base station additionally allocates a reference signal resource for at least one of reference signal patterns for adjacent channel environments. In addition, the base station transmits a message for configuring the use of the partially pre-trained neural network model to the UE and transmits reference signals through the additional allocated reference signal resource.

As shown in the embodiment described with reference to FIG. 27, the first scheme and the second scheme may be adaptively applied. The above-described adaptive operation of the first scheme and the second scheme may be summarized as in Table 2 below. In the description below, the term 'controller' is used to refer to an entity that controls determination of a channel environment and application of a channel estimation technique. In some cases, a base station may operate as a controller, or any other upper node than a base station may operate as a controller. Accordingly, in the description below, a controller may be understood as a base station or an upper node.

[Table 2]

| Adaptive operation procedure of the first scheme and the second scheme | | |
|---|---|---|
| 1 | | A channel environment of a UE is determined, and a CSI-RS and a channel reconstruction DNN are determined according to the channel environment of the UE. |
| | 1) | A controller may receive a channel measurement result for the UE and information on a UE context (e.g., location, geometry, region, etc.), determine the channel environment of the UE based on the UE context, and determine a CSI-RS pattern and the channel reconstruction DNN based on the channel environment of the UE. |
| | 2) | Alternatively, the UE may determine its channel environment by using a channel measurement result and the UE context and give feedback on the channel environment to the controller. In case the UE determines the channel environment, the controller may provide information for determining the channel environment, for example, at least one of information related to channel clustering, information related to a technique used for clustering (e.g., DNN structure), information related to a clustering criterion, and a parameter necessary to obtain a cluster from a channel measured by the UE, such that the UE may determine the channel environment. |
| 2 | | The controller selectively delivers information on a CSI-RS and a channel reconstruction DNN according to a channel environment experienced by the UE and locations of adjacent UEs. Herein, the controller may distinguish a situation where the first scheme is applied and a situation where the second scheme is applied, and deliver information on a CSI-RS pattern and a channel reconstruction DNN according to the first scheme or the second scheme. |
| | 1) | If the UE is a matched UE that experiences a channel environment requiring full pre-training defined in the second scheme, the controller delivers information related to a CSI-RS pattern and a channel reconstruction DNN of a corresponding channel state. For example, the delivered information may include at least one of information on a channel environment experienced by the UE, a CSI-RS resource, and channel reconstruction DNN information. In this case, for a channel estimation operation, it may be understood that there is no difference between the first scheme and the second scheme. |
| | 2) | If the UE is a mismatched UE that experiences a mixed channel environment, the controller may select one channel estimation scheme out of the first scheme or the second scheme according to a current situation of the mismatched UE and a CSI-RS transmission situation of a base station and operate as follows. |

EP 4 593 449 A1

(continued)

| Adaptive operation procedure of the first scheme and the second scheme | | | |
|---|---|---|---|
| | | (1) | Even when no CSI-RS resource is allocated to the mismatched UE that experiences the mixed channel environment, if every CSI-RS with a fully pre-trained channel state, which should be received for operation in the second scheme, is capable of being received, that is, if a base station is already transmitting a CSI-RS for full pre-training channel environments that are necessary for the mismatched UE to operate in the second scheme, the controller provides at least one of information on a CSI-RS resource required for the UE among CSI-RS resources for an adjacent channel environment, which are already being transmitted to the mismatched UE, information on a channel environment to which the UE belongs, and channel reconstruction DNN information. In addition, the controller instructs the UE to perform channel estimation by combining received CSI-RSs. |
| | | (2) | On the other hand, even when the UE belongs a mixed channel environment that is defined in the second scheme, if an adjacent CSI-RS, which is necessary for a mismatched UE to operate according to the second scheme, need to be newly allocated, the controller allocates a fully pre-trained CSI-RS resource for a channel environment experienced by the UE and transmits a CSI-RS. That is, the controller supports a channel estimation method based on the first scheme. |
| | | (3) | Alternatively, even when the UE belongs a mixed channel environment that is defined in the second scheme, if an adjacent CSI-RS, which is necessary for a mismatched UE to operate according to the second scheme, need to be newly allocated, the controller compares an amount of a CSI-RS resource, which should be allocated for the mismatched UE to operate according to the second scheme, and an amount of a CSI-RS resource that should be allocated for the mismatched UE to operate according to the first scheme. In case the second scheme consumes a smaller amount of CSI-RS resource than the first scheme, the controller operates in the second scheme. In case the first scheme requires a smaller amount of CRI-RS resource than the second scheme, the controller operates in the first scheme. |

In case a channel reconstruction DNN is operated in a base station, a UE may not estimate a channel by using the channel reconstruction DNN but give feedback on received CSI-RS information (e.g., received value) to the base station. In this case, the base station may estimate a channel by using the CSI-RS information on which the UE gives the feedback.

In addition, a base station may allocate a CSI report resource to a mismatched UE following the second scheme such that the UE may give feedback on channel information that is estimated using information on a CSI-RS received in the UE or the CSI-RS.

In case a mismatched UE operating according to the second scheme performs channel estimation (e.g., the case 3-1)-(1) in Table 2), a resource is allocated such that the mismatched UE may receive adjacent CSI-RSs and then give feedback on a channel estimated through combination.

As for a mismatched UE operating according to the second scheme, if a base station estimates a channel, the UE may give feedback on received adjacent CSI-RS information to the base station. Herein, the UE may give feedback on information (e.g., received value) on each of received adjacent CRI-RSs or feedback on a combined result of the adjacent CSI-RSs.

For channel estimation or measurement according to the above-described various embodiments, offline learning is required for a reference signal pattern and a neural network model. Offline learning may be performed as follows. In the description below, an entity that performs offline learning is referred to as a 'trainer'. The trainer may be a computing device with computational capability.

A trainer clusters channel environments/states/clusters by using synthetized channel data or measured channel data. Clustering of channel data may be performed based on a large scale feature of synthesized or measured channel data, that is, based on a criterion such as a geographical or geometric feature (e.g., building distribution), a statistical feature of a channel (e.g., azimuth speed, latency power profile), and an antenna array structure, and channel data with high similarity based on a given criterion may be bound into a single cluster. Accordingly, by distinguishing geographical and geometric features and a statistical feature of a channel that are generated or measured for contagious channel situations, a finite number of channel environments/states/clusters may be defined.

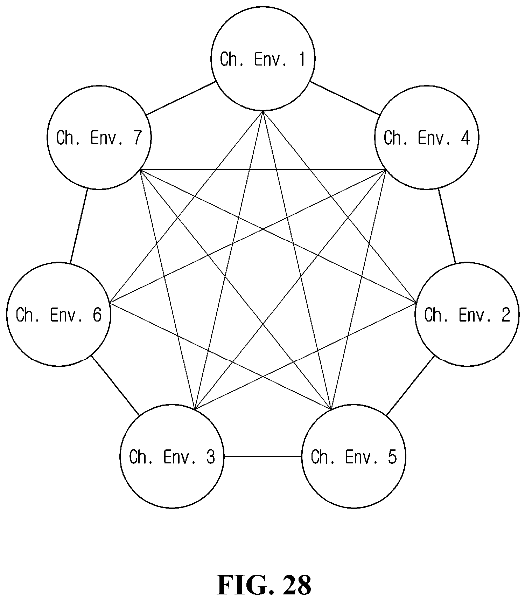

FIG. 28 illustrates an example of clustering of channel environments according to an embodiment of the present disclosure. FIG. 28 exemplifies a result of clustering channel data into 7 channel environments/states/clusters according to generated or measured geometries. As the number of distinguished channel environments/states/clusters increases, a resolution for distinguishing the channel environments/states/clusters will increase.

A plurality of channel environments/states/clusters are defined through clustering, and there is similarity between different clusters. Similarity between channel environments/states/clusters may be determined based on at least one of a correlation value between channel data, a singular value decomposition (SVD) vector, and an absolute value of a channel, as shown in Table 3 below.

[Table 3]

| Criterion | Formula |
|---|---|
| Channal correlation-based similarity | $\dfrac{Tr\{(H_n(H_n)^H)(H_m(H_m)^H)\}}{\|H_n(H_n)^H\|_F \, \|H_m(H_m)^H\|_F}$ |
| SVD vector-based similarity | $(v_n)^H v_m$ |
| Similarity based on absolute value of channel | $\left(\sum_a \sum_b (|H_n|_{a,b} - |H_m|_{a,b})^2\right)^{-1}$ |

In Table 3, Tr{} means a trace operation of a matrix, H means the Hermitian transpose, $\|\cdot\|$F means the Frobenius norm, $|M|a,b$ means the absolute value of an element in the a-th row and b-th column of a matrix M. $H_n$ and $H_m$ mean the n-th channel and the m-th channel respectively, and $v_n$ and $v_m$ mean a singular vector corresponding to a largest singular value among SVD vectors in the n-th channel and the m-th channel respectively.

When similarity between channel environment/states/clusters is defined according to one of the criteria exemplified in Table 3, the similarity between channel environment/states/clusters may be described as shown in Table 4 below. In case 7 channel environment/states/clusters are distinguished as in FIG. 28, the similarity between channel environment/states/clusters may be described as shown in Table 4 below. In Table 4, similarity to itself is expressed as 1, and a relation to another channel environment/state/cluster is expressed as a value smaller than 1. Based on Table 4, an edge value of a channel environment/state/cluster graph may be determined.

[Table 4]

| | Channel environ ment 1 | Channel environ ment 2 | Channel environ ment 3 | Channel environ ment 4 | Channel environ ment 5 | Channel environ ment 6 | Channe l environ ment 7 |
|---|---|---|---|---|---|---|---|
| Channel environ ment 1 | 1 | A12 | A13 | A14 | A15 | A16 | A17 |
| Channel environ ment 2 | A21 | 1 | A23 | A24 | A25 | A26 | A27 |
| Channel environ ment 3 | A2' | A7' | 1 | A12 | A13 | A14 | A15 |
| Channel environ ment 4 | A3' | A8' | A12' | 1 | A16 | A17 | A18 |
| Channel environ ment 5 | A4' | A9' | A13' | A16' | 1 | A19 | A20 |
| Channel environ ment 6 | A5' | A10' | A14' | A17' | A19' | 1 | A21 |
| Channel environ ment 7 | A6' | A11' | A15' | A18' | A20' | A21' | 1 |

As the similarity between channel environments/states/clusters becomes higher, the correlation between channel environments/states/clusters increases. Accordingly, in case a CSI-RS is transmitted for all channel environments with high similarity, CSI-RS transmission may be subject to increasing redundancy. Accordingly, a trainer may select a basis channel environment/state/cluster among all channel environments/states/clusters based on similarity between channel environments/states/clusters, perform full training only for the basis channel environment/state/cluster, and transmit a CSI-RS. The basis channel environment/state/cluster means the basis channel environment/state/cluster itself or a channel environment/state/cluster capable of representing all channel environments/states/clusters through a combination of learning results.

A basis channel environment/state/cluster is a basic element representing all channel environments/states/clusters. Among all the channel environments/states/clusters, for a channel environment/state/cluster other than the basis channel environment/state/cluster (e.g., a mixed channel environment/state/cluster), channel estimation may be performed by using or with the help of a learning result of the basis channel environment/state/cluster. Accordingly, as the number of basis channel environments/states/clusters decreases, CSI-RS transmission overhead is reduced. For a selected basis channel environment/state/cluster, both a CSI-RS and a channel reconstruction DNN are trained, that is, full pre-training is performed. In the case of a channel environment/state/cluster other than the basis channel environment/state/cluster, only the channel reconstruction DNN is trained, that is, partial pre-training is performed.

A basis channel environment/state/cluster may be selected as follows. Referring to the graph of FIG. 28, a trainer selects a loop with a lowest edge value, that is, a lowest sum of similarities, among loops with vertices of channel environments/states/clusters. The trainer performs full pre-training for a selected vertex. The other channel environments/states/clusters become a mixed channel environment, and the trainer performs partial pre-training for the mixed channel environment. Herein, the trainer performs channel estimation performs channel estimation learning for all the channel environments/states/clusters by modifying the number of vertices (e.g., the number of basis channel environments/states/clusters), and designates a channel environment/state/cluster present at a vertex of a loop with a smallest number of vertices among loops capable of channel estimation for all the channel environments/states/clusters as a basis channel environment/state/cluster.

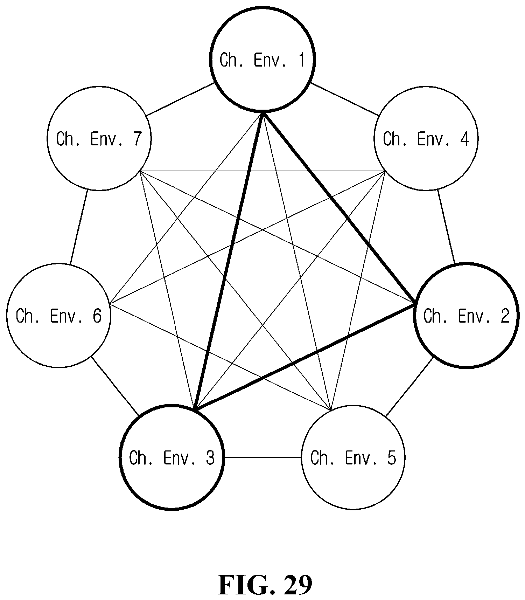

FIG. 29 illustrates an example of selection of a basis channel environment according to an embodiment of the present disclosure. FIG. 29 exemplifies a case where full pre-training is performed on 3 channel environments/states/clusters and a loop connecting a first channel environment, a second channel environment and a third channel environment has a smallest sum of similarities as compared to all the other loops. Referring to FIG. 29, the first channel environment, the second channel environment and the third channel environment are selected as channel environments/states/clusters for which full pre-training is to be performed, and the remaining channel environments/states/clusters are designated as a mixed channel environment.

In order to perform partial pre-training for a channel environment/state/cluster of a mixed channel environment, it is necessary to select an adjacent channel environment/state/cluster of each mixed channel environment. Among basis channel environments/states/clusters that are selected as described above and for which full pre-training is to be performed, channel environments/states/clusters with high similarity to a corresponding mixed channel environment are selected as an adjacent channel environment/state/cluster. In other words, a channel environment/state/cluster connected through an edge with a highest similarity among edges starting from a cluster of a mixed channel environment on a graph is selected. Herein, a high similarity is a similarity satisfying a given similarity condition, meaning, for example, a similarity above a threshold or one of top n similarities. The similarity condition may be referred to as adjacency condition.

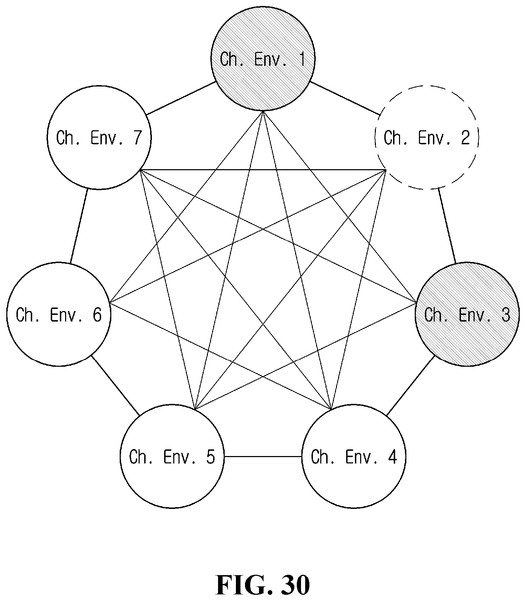

FIG. 30 illustrates an example of selection of channel environments similar to each other according to an embodiment of the present disclosure. FIG. 30 exemplifies a selection result of adjacent channel environments/states/clusters for channel environments/states/clusters of a mixed channel environment. Referring to FIG. 30, for a second channel environment that is a mixed channel environment, 2 adjacent channel environments/states/clusters are selected. Herein, among channel environments/states/clusters for which full pre-training is performed, a first channel environment and a third channel environment have a high similarity to the second channel environment. When a channel state for full pre-training and a channel state of a mixed channel environment are distinguished from each other, a trainer performs full pre-training and partial pre-training, as exemplifies in FIG. 23A to FIG. 23G.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

**Industrial Applicability**

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1.  A method for operating a user equipment (UE) in a wireless communication system, the method comprising:

    receiving configuration information related to channel measurement from a base station;
    receiving reference signals for the channel measurement;
    generating feedback information related to a channel by using the reference signals; and
    transmitting the feedback information to the base station,
    wherein the configuration information includes information indicating a channel environment, to which the UE belongs, out of at least one basis channel environment and at least one mixed channel environment, or includes information necessary for determining the channel environment.

2.  The method of claim 1, wherein the information necessary for determining the channel environment includes, as a UE context requirement for each channel environment, at least one of a location, a geometry, a region, a moving speed, and a channel value change pattern.

3.  The method of claim 1, wherein the configuration information further includes at least one of information related to a neural network model for the channel measurement, information related to a reference signal pattern, and information related to a channel measurement scheme.

4.  The method of claim 1, wherein the reference signals follow at least one reference signal pattern that is learned for the channel environment to which the UE belongs.

5.  The method of claim 1, wherein the feedback information includes at least one of received values of the reference signals and channel information that is predicted from the received values by using at least one neural network model for the channel environment.

6.  The method of claim 1, further comprising:

    obtaining UE context information necessary for determining the channel environment; and
    transmitting the UE context information to the base station.

7.  The method of claim 1, further comprising:

    obtaining UE context information necessary for determining a channel environment;
    determining the channel environment based on the UE context information; and
    transmitting information indicating the channel environment to the base station.

8.  The method of claim 1, further comprising:

    in case that the channel environment being a basis channel environment, generating channel information by using a neural network model that is trained for the basis channel environment; and
    in case that the channel environment being a mixed channel environment, generating channel information by using at least one neural network model of neural network models, which are trained for adjacent channel environments of the mixed channel environment, and another neural network model that is trained to combine an output of the neural network models.

9.  The method of claim 1, wherein the at least one mixed channel environment is a channel environment with a similarity that satisfies an adjacency condition for basis channel environments,

    wherein a neural network mode for the at least one mixed channel environment is trained to predict channel information by using a reference signal pattern for the basis channel environments with the similarity,
    wherein the neural network mode for the at least one mixed channel environment includes first neural network models for the basis channel environments and a second neural network model for combining channel information, and
    wherein the neural network mode for the at least one mixed channel environment is trained by partial training for the second neural network model.

10. A method for operating a base station in a wireless communication system, the method comprising:

transmitting configuration information related to channel measurement to a user equipment (UE);
transmitting reference signals for the channel measurement;
receiving feedback information related to a channel by using the reference signals; and
obtaining channel information for the UE based on the feedback information,
wherein the configuration information includes information indicating a channel environment, to which the UE belongs, out of at least one basis channel environment and at least one mixed channel environment, or includes information necessary for determining the channel environment.

11. The method of claim 10, further comprising:

identifying the channel environment to which the UE belongs; and
in case that the channel environment being a basis channel environment, determining application of a fully pre-trained neural network model to the UE.

12. The method of claim 10, further comprising:

identifying the channel environment to which the UE belongs; and
in case that the channel environment being a mixed channel environment, determining application of a partially pre-trained neural network model to the UE.

13. The method of claim 10, further comprising:

identifying the channel environment to which the UE belongs;
in case that the channel environment being a mixed channel environment, determining whether allocation of an additional reference signal resource is necessary to apply a partially pre-trained neural network model to the UE;
in case that the allocation of the additional reference signal resource being necessary, determining application of a fully pre-trained neural network model for the mixed channel environment; and
in case that the allocation of the additional reference signal resource being not necessary, determining application of a partially pre-trained neural network model for the mixed channel environment.

14. The method of claim 10, further comprising:

identifying the channel environment to which the UE belongs;
in case that the channel environment being a mixed channel environment, determining whether allocation of an additional reference signal resource is necessary to apply a partially pre-trained neural network model to the UE;
in case that the allocation of the additional reference signal resource being necessary, comparing a first required amount for a reference signal resource, which should be allocated to apply a fully pre-trained neural network model for the mixed channel environment, and a second required amount for the additional reference signal resource;
in case that the first required amount being smaller than the second required amount, determining application of the fully pre-trained neural network model for the mixed channel environment; and
in case that the first required amount being greater than or equal to the second required amount, determining application of a partially pre-trained neural network model for the mixed channel environment.

15. A user equipment (UE) in a wireless communication system, the UE comprising:

a transceiver; and
a processor coupled with the transceiver,
wherein the processor is configured to:

receive configuration information related to channel measurement from a base station,
receive reference signals for the channel measurement,
generate feedback information related to a channel by using the reference signals, and
transmit the feedback information to the base station, and
wherein the configuration information includes information indicating a channel environment, to which the UE belongs, out of at least one basis channel environment and at least one mixed channel environment, or includes information necessary for determining the channel environment.

16. A base station in a wireless communication system, the base station comprising:

a transceiver; and
a processor coupled with the transceiver,
wherein the processor is configured to:

transmit configuration information related to channel measurement to a user equipment (UE),
transmit reference signals for the channel measurement,
receive feedback information related to a channel by using the reference signals, and
obtain channel information for the UE based on the feedback information, and
wherein the configuration information includes information indicating a channel environment, to which the UE belongs, out of at least one basis channel environment and at least one mixed channel environment, or includes information necessary for determining the channel environment.

17. A communication device comprising:

at least one processor; and
at least one computer memory coupled with the at least one processor and storing an instruction that instructs operations when being executed by the at least one processor,
wherein the operations comprise:

receiving configuration information related to channel measurement from a base station;
receiving reference signals for the channel measurement;
generating feedback information related to a channel by using the reference signals; and
transmitting the feedback information to the base station, and
wherein the configuration information includes information indicating a channel environment, to which the UE belongs, out of at least one basis channel environment and at least one mixed channel environment, or includes information necessary for determining the channel environment.

18. A non-transitory computer-readable medium storing at least one instruction, the non-transitory computer-readable medium comprising the at least one instruction that is executable by a processor,
wherein the at least one instruction controls a device to:

receive configuration information related to channel measurement from a base station,
receive reference signals for the channel measurement,
generate feedback information related to a channel by using the reference signals, and
transmit the feedback information to the base station, and
wherein the configuration information includes information indicating a channel environment, to which the UE belongs, out of at least one basis channel environment and at least one mixed channel environment, or includes information necessary for determining the channel environment.

**FIG. 1**

**FIG. 2**

EP 4 593 449 A1

Device(300)

| Communication unit(310)<br>(e.g.,5G Communication unit) | Control unit(320)<br>(e.g.,processor(s)) |
| Communication circuit(312)<br>(e.g.,processor(s),Memory(s)) | Memory unit(330)<br>(e.g.,RAM,storage) |
| Transceiver(s)(314)<br>(e.g.,RF unit(s),antenna(s)) | Additional components(340)<br>(e.g.,power unit/battery, I/O unit,<br>driving unit, computing unit) |

**FIG. 3**

440a

400

Power supply
unit

408

420

410

Communication
unit

Control
unit

430

Memory
unit

440c

I/O unit

Display

440d

440b

Interface
unit

**FIG. 4**

| Car or autonomous driving car (500) |
|---|
| Communication unit (510) |
| Control unit (520) |
| Memory unit (530) |
| Driving unit (540a) |
| Power supply unit (540b) |
| Sensor unit (540c) |
| Autonomous driving unit (540d) |

550

552

| Device (200a,200b) |
|---|
| Communication unit (512) |
| Control unit (522) |
| Memory unit (532) |
| Driving unit (540a) |
| Power supply unit (540b) |
| Sensor unit (540c) |
| Autonomous driving unit (540d) |

**FIG. 5**

FIG. 6

FIG. 7

FIG. 8

| | Radio | Microwave | Infrared | Visible | Ultraviolet | X-Ray | Gamma-Ray |
|---|---|---|---|---|---|---|---|

mmWave  Terahertz

Wavelength   $10^8$m   1m      10mm  1mm  0.1mm   700nm 390nm      10nm       0.01nm

Radiation Type

Frequency   3 Hz  300 MHz   30 GHz  300 GHz   3 THz  430 THz 730 THz    30 PHz     30 EHz

Mega: $10^6$   Giga: $10^9$   Tera: $10^{12}$   Peta: $10^{15}$   Exa: $10^{18}$

**FIG. 9**

EP 4 593 449 A1

THz SMALL CELLS

THz
BACKHAUL
LINK

BACKHAUL
COMMUNICATION

VEHICLUAR
COMMUNICATION

THz DATA
CENTRE
NETWORK

THz KIOSK
DOWNLOADING

**FIG. 10**

**FIG. 11**

INPUT LAYER    INPUT LAYER    OUTPUT LAYER

INPUT-HIDDEN    HIDDEN-OUTPUT
WEIGHT    WEIGHT
$W^{d \times H}$    $W^{H \times K}$

# FIG. 12

**FIG. 13**

INPUT LAYER        HIDDEN LAYER        OUTPUT LAYER

INPUT-HIDDEN        HIDDEN-OUTPUT
WEIGHT             WEIGHT
$W^{h \times w \times h \times w}$        $W^{h \times w \times h \times w}$

**FIG. 14**

**FIG. 15**

**FIG. 16**

**FIG. 17**

**FIG. 18**

Given channel data

1940

channel
clustering

Ch. Env. 1
(1931)

Ch. Env. 6
(1936)

Ch. Env. 4
(1934)

Ch. Env. 3(1933)

Ch.
Env. 7
(1937)

Ch. Env. 2(1932)

Ch. Env. 5
(1935)

**FIG. 19**

**FIG. 20A**

**FIG. 20B**

Channel
environment 3

CSI-RS overhead=C
CSI-RS pattern 3
(CSI-RS3)

Channel
reconstruction 3

received
CSI-RS pattern 3

DNN 3

Size of Input layer=C
Size of Output layer=J

## FIG. 20C

Channel environment 1 + Channel environment 2

CSI-RS overhead=D
CSI-RS pattern 4
(CSI-RS4)

● ○ ○ ○ ○ ● ○ ●
○ ● ○ ○ ○ ○ ● ○
○ ○ ○ ○ ● ○ ○ ○
○ ○ ● ○ ○ ○ ● ○
● ○ ○ ○ ● ○ ○ ○
○ ○ ○ ○ ○ ○ ○ ●
○ ○ ○ ○ ○ ● ○ ○
○ ● ○ ○ ○ ○ ○ ●

Channel reconstruction 4

received
CSI-RS pattern 4

DNN 4

Size of Input layer=D
Size of Output layer=J

## FIG. 20D

Channel environment 1

+

Channel environment 3

CSI-RS overhead=E
CSI-RS pattern 5
(CSI-RS5)

Channel reconstruction 5

received
CSI-RS pattern 5

DNN 5

Size of Input layer=E
Size of Output layer=J

**FIG. 20E**

Channel
environment 2

+

Channel
environment 3

CSI-RS overhead=F
CSI-RS pattern 6
(CSI-RS6)

Channel
reconstruction 6

received
CSI-RS pattern 6

DNN 6

Size of Input layer=F
Size of Output layer=J

**FIG. 20F**

Channel
environment 1

Channel
environment 2

+

Channel
environment 3

CSI-RS overhead=G
CSI-RS pattern 7
(CSI-RS7)

Channel
reconstruction 7

received
CSI-RS pattern 7

DNN 7

Size of Input layer=G
Size of Output layer=J

# FIG. 20G

Ch. Env. 1 → 2110-1

Ch. Env. 2 → 2110-2

Ch. Env. 3 → 2110-3

Ch. Env. 1 & 2 → 2110-4

Ch. Env. 2 & 3 → 2110-5

CSI-RS for Ch. Env. 1
(CSI-RS overhead A)

CSI-RS for Ch. Env. 2
(CSI-RS overhead B)

CSI-RS for Ch. Env. 3
(CSI-RS overhead C)

CSI-RS for Ch. Env. 1 & 2
(CSI-RS overhead B)

CSI-RS for Ch. Env. 2 & 3
(CSI-RS overhead C)

**FIG. 21**

Ch. Env. 1
(2231)

Mixed Channel
environment 3

Mixed Channel
environment 1

Ch. Env. 6
(2236)

Ch. Env. 4
(2234)

Ch. Env. 3(2233)

Ch.
Env. 7
(2237)

Ch. Env. 2(2232)

Mixed Channel
environment 4

Ch. Env. 5
(2235)

Mixed Channel
environment 2

**FIG. 22**

Channel
environment 1

CSI-RS overhead=A
CSI-RS pattern 1
(CSI-RS1)

Channel reconstruction 1

received
CSI-RS pattern 1

DNN 1

Size of Input layer=A
Size of Output layer=J

**FIG. 23A**

Channel
environment 2

CSI-RS overhead=B
CSI-RS pattern 2
(CSI-RS2)

Channel reconstruction 2

received
CSI-RS pattern 2

DNN 2

Size of Input layer=B
Size of Output layer=J

FIG. 23B

EP 4 593 449 A1

EP 4 593 449 A1

Channel
environment 3

CSI-RS overhead=C
CSI-RS pattern 3
(CSI-RS3)

Channel reconstruction 3

received
CSI-RS pattern 3

DNN 3

Size of Input layer=C
Size of Output layer=J

**FIG. 23C**

Channel environment 1 + Channel environment 2

CSI-RS overhead = A+B

CSI-RS pattern 1 (CSI-RS1)  CSI-RS pattern 2 (CSI-RS2)

Channel reconstruction 4

received CSI-RS pattern 1   received CSI-RS pattern 2

DNN 1        DNN 2

Combining DNN 1

DNN 4

Size of Input layer = A+B
Size of Output layer=J

**FIG. 23D**

EP 4 593 449 A1

Channel
environment 1

Channel
environment 3

+

CSI-RS overhead = A+C

CSI-RS pattern 1
(CSI-RS1)

CSI-RS pattern 3
(CSI-RS3)

Channel reconstruction 5

received
CSI-RS pattern 1

received
CSI-RS pattern 3

DNN 1

DNN 3

DNN 5

Combining
DNN 2

Size of Input layer = A+C
Size of Output layer=J

**FIG. 23E**

EP 4 593 449 A1

Channel
environment 2

+

Channel
environment 3

CSI-RS overhead = B+C

CSI-RS pattern 2        CSI-RS pattern 3
(CSI-RS2)               (CSI-RS3)

Channel reconstruction 6

received                    received
CSI-RS pattern 2    CSI-RS pattern 3

DNN 2               DNN 3

Combining
DNN 6          DNN 3

Size of Input layer = B+C
Size of Output layer=J

**FIG. 23F**

Channel
environment 1

Channel
environment 2

+

Channel
environment 3

CSI-RS overhead = A+B+C

CSI-RS pattern 1
(CSI-RS1)

CSI-RS pattern 2
(CSI-RS2)

CSI-RS pattern 3
(CSI-RS3)

Channel reconstruction 7

received
CSI-RS pattern 2

received
CSI-RS pattern 1

received
CSI-RS pattern 3

DNN 1    DNN 2    DNN 3

Combining
DNN 7    DNN 4

Size of Input layer = A+B+C
Size of Output layer=J

**FIG. 23G**

EP 4 593 449 A1

**FIG. 24**

START

RECEIVE CONFIGURATION INFORMATION
RELATED TO CHANNEL MEASUREMENT — S2501

RECEIVE DOWNLINK REFERENCE SIGNALS — S2503

PERFORM CHANNEL MEASUREMENT
BASED ON CHANNEL ENVIRONMENT — S2505

TRANSMIT FEEDBACK INFORMATION
RELATED TO CHANNEL — S2507

RECEIVE DOWNLINK DATA — S2509

END

**FIG. 25**

START

S2601

CONFIGURE REFERENCE SIGNAL
BASED ON CHANNEL ENVIRONMENT

S2603

TRANSMIT CONFIGURATION INFORMATION
RELATED TO CHANNEL MEASUREMENT

S2605

TRANSMIT DOWNLINK REFERENCE SIGNALS

S2607

RECEIVE FEEDBACK INFORMATION
RELATED TO CHANNEL

S2609

TRANSMIT DOWNLINK DATA

END

**FIG. 26**

START

S2701

IDENTIFY CHANNEL
ENVIRONMENT TO
WHICH UE BELONGS

S2703

MATCHED UE? —NO→ NEW REFERENCE
SIGNAL RESOURCE NEED TO BE
ALLOCATED WHEN SECOND SCHEME
IS APPLIED? —NO→

S2707

YES

YES↓

S2705

APPLY FULLY
PRE-TRAINED NEURAL ←YES—
NETWORK MODEL

REQUIRED
AMOUNT FOR REFERENCE
SIGNAL RESOURCE OF FIRST SCHEME
IS SMALLER THAN REQUIRED AMOUNT FOR
REFERENCE SIGNAL RESOURCE
OF SECOND SCHEME?

S2711

NO↓

S2709

APPLY PARTIALLY PRE-TRAINED
NEURAL NETWORK MODEL

END

**FIG. 27**

**FIG. 28**

**FIG. 29**

**FIG. 30**

**EP 4 593 449 A1**

## INTERNATIONAL SEARCH REPORT

International application No.

**PCT/KR2022/013978**

### A. CLASSIFICATION OF SUBJECT MATTER

**H04W 24/08**(2009.01)i; **H04B 17/24**(2015.01)i; **H04B 17/309**(2015.01)i; **H04W 8/22**(2009.01)i; **H04L 5/00**(2006.01)i; **G06N 3/04**(2006.01)i

According to International Patent Classification (IPC) or to both national classification and IPC

### B. FIELDS SEARCHED

Minimum documentation searched (classification system followed by classification symbols)

H04W 24/08(2009.01); H04B 7/04(2006.01); H04B 7/0417(2017.01); H04B 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 측정(channel measurement), 기준 신호(reference signal), 피드백(feedback), 기저(basis), 혼합(mixed), 채널 환경(channel environment), UE context, location, region, movement speed, 신경망 모델(neural network model), 예측(predict), 결합(joint), 유사성(similarity), 완전한(fully), 부분적(partial)

### C. DOCUMENTS CONSIDERED TO BE RELEVANT

| Category* | Citation of document, with indication, where appropriate, of the relevant passages | Relevant to claim No. |
|---|---|---|
| Y | US 2022-0271804 A1 (LG ELECTRONICS INC.) 25 August 2022 (2022-08-25)<br>See paragraphs [0023], [0361] and [0365]; and claim 4. | 1-7,10-12,15-18 |
| A | | 8-9,13-14 |
| Y | VIVO. Other aspects on AI/ML for CSI feedback enhancement. R1-2203551, 3GPP TSG RAN WG1 #109-e, e-Meeting. 29 April 2022.<br>See section 3.1. | 1-7,10-12,15-18 |
| Y | OPPO. On sub use cases and other aspects of AI/ML for CSI feedback enhancement. R1-2206316, 3GPP TSG-RAN WG1 Meeting #110. Toulouse, France. 12 August 2022.<br>See section 2.2.3. | 11-12 |
| A | INTERDIGITAL, INC. Discussion on AI/ML for CSI feedback enhancement. R1-2204051, 3GPP TSG-RAN WG1 #109-e, e-Meeting. 29 April 2022.<br>See sections 2-3. | 1-18 |

☑ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 May 2023** | **31 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

70

## INTERNATIONAL SEARCH REPORT

| | International application No. |
|---|---|
| | **PCT/KR2022/013978** |

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0086600 A (LG ELECTRONICS INC.) 23 June 2022 (2022-06-23)<br>See paragraphs [0029]-[0393]. | 1-18 |

Form PCT/ISA/210 (second sheet) (July 2022)

**INTERNATIONAL SEARCH REPORT**
Information on patent family members

International application No.

**PCT/KR2022/013978**

| Patent document cited in search report | | | Publication date (day/month/year) | Patent family member(s) | | | Publication date (day/month/year) |
|---|---|---|---|---|---|---|---|
| US | 2022-0271804 | A1 | 25 August 2022 | CN | 107534540 | A | 02 January 2018 |
| | | | | CN | 107534540 | B | 23 October 2020 |
| | | | | US | 10236951 | B2 | 19 March 2019 |
| | | | | US | 10608708 | B2 | 31 March 2020 |
| | | | | US | 10985808 | B2 | 20 April 2021 |
| | | | | US | 11349529 | B2 | 31 May 2022 |
| | | | | US | 2018-0102817 | A1 | 12 April 2018 |
| | | | | US | 2019-0158155 | A1 | 23 May 2019 |
| | | | | US | 2020-0186210 | A1 | 11 June 2020 |
| | | | | US | 2021-0203387 | A1 | 01 July 2021 |
| | | | | WO | 2016-163843 | A1 | 13 October 2016 |
| KR | 10-2022-0086600 | A | 23 June 2022 | WO | 2021-071337 | A1 | 15 April 2021 |

Form PCT/ISA/210 (patent family annex) (July 2022)